(19) **Europäisches Patentamt / European Patent Office / Office européen des brevets**

(11) **EP 2 914 701 B1**

(12) **FASCICULE DE BREVET EUROPEEN**

(45) Date de publication et mention
de la délivrance du brevet:
**19.07.2017 Bulletin 2017/29**

(21) Numéro de dépôt: **13801633.2**

(22) Date de dépôt: **30.10.2013**

(51) Int Cl.:
*C10K 1/00* (2006.01)  *C10J 3/00* (2006.01)
*C10K 1/10* (2006.01)  *C10K 1/20* (2006.01)
*C10K 1/34* (2006.01)  *C10K 3/04* (2006.01)
*C10K 3/06* (2006.01)  *C10G 2/00* (2006.01)

(86) Numéro de dépôt international:
**PCT/FR2013/052600**

(87) Numéro de publication internationale:
**WO 2014/068253 (08.05.2014 Gazette 2014/19)**

(54) **PROCEDE AMELIORE DE CONVERSION D'UNE CHARGE CONTENANT DE LA BIOMASSE POUR LA PRODUCTION D'HYDROCARBURES PAR VOIE DE SYNTHESE FISCHER-TROPSCH**

**VERFAHREN ZUR UMWANDLUNG EINES BIOMASSEHALTIGEN AUSGANGSSTOFFES ZUR HERSTELLUNG VON KOHLENWASSERSTOFFEN MITTELS FISCHER-TROPSCH-SYNTHESE**

**IMPROVED METHOD FOR CONVERTING A FEEDSTOCK CONTAINING BIOMASS FOR THE PRODUCTION OF HYDROCARBONS, BY MEANS OF FISCHER-TROPSCH SYNTHESIS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2012 FR 1202944**

(43) Date de publication de la demande:
**09.09.2015 Bulletin 2015/37**

(73) Titulaires:
- **IFP Énergies nouvelles
  92852 Rueil-Malmaison Cedex (FR)**
- **AXENS
  92508 Rueil Malmaison Cedex (FR)**
- **Bionext
  60280 Venette (FR)**
- **Commissariat à l'Énergie Atomique
  et aux Énergies Alternatives
  75015 Paris (FR)**
- **Sofiproteol
  75378 Paris Cedex 08 (FR)**
- **ThyssenKrupp Uhde GmbH
  44141 Dortmund (DE)**
- **TOTAL RAFFINAGE CHIMIE
  92400 Courbevoie (FR)**

(72) Inventeurs:
- **BOISSONNET, Guillaume
  F-38100 Grenoble (FR)**
- **HECQUET, Michael
  F-76930 Octeville Sur Mer (FR)**
- **AVENIER, Priscilla
  F-38000 Grenoble (FR)**
- **BOURNAY, Laurent
  F-69440 Chaussan (FR)**
- **CHICHE, David
  F-69007 Lyon (FR)**
- **HERAUD, Jean-Philippe
  F-69780 Saint Pierre De Chandieu (FR)**
- **LUCQUIN, Anne Claire
  F-38550 Saint Maurice l'Exil (FR)**
- **ULLRICH, Norbert
  45139 Essen (DE)**
- **FEDOU, Stéphane
  F-75002 Paris (FR)**
- **ROUSSEAU, Julien
  F-75008 Paris (FR)**
- **LEMAIRE, Raphael
  F-75012 Paris (FR)**
- **VIGUIE, Jean-Christophe
  F-69006 Lyon (FR)**

(56) Documents cités:
**WO-A1-00/74838      WO-A2-2007/134075
FR-A1- 2 925 915      US-A1- 2006 233 687**

EP 2 914 701 B1

Remarques:
  Le dossier contient des informations techniques présentées postérieurement au dépôt de la demande et ne figurant pas dans le présent fascicule.

**Description**

## DOMAINE DE L'INVENTION

La présente invention a pour objet la valorisation de biomasse, typiquement pour la production d'hydrocarbures liquides, de biocarburants, et éventuellement la production de bases pétrochimiques et/ou de bases chimiques et/ou d'hydrogène.

Plus particulièrement, la présente invention concerne un procédé intégré de conversion d'une charge contenant au moins une fraction de biomasse en vue de la production d'hydrocarbures de synthèse par la réaction Fischer-Tropsch, notamment des fractions GPL (Gaz de Pétrole Liquéfié), naphta, essence, kérosène et gazole de haute qualité ou des bases lubrifiantes.

## ART ANTERIEUR

Un grand nombre de brevets décrivent des chaînes de production d'hydrocarbures de synthèse par voie de synthèse Fischer-Tropsch à laquelle sont souvent associées des étapes d'hydrotraitement et d'isomérisation des coupes hydrocarbonées issues de cette synthèse.

Un des problèmes majeurs rencontrés par l'homme du métier, plus particulièrement lors du traitement d'une charge comprenant de la biomasse est que cette dernière présente des teneurs fortement élevées en composés halogénés. Les composés halogénés présents dans le gaz de synthèse peuvent entraîner une corrosion accélérée des installations dans lesquelles ils sont mis en oeuvre. Ces impuretés halogénées sont également susceptibles d'empoisonner les catalyseurs mis en oeuvre dans les procédés de synthèse Fischer-Tropsch, mais également les catalyseurs mis en oeuvre dans la réaction de conversion du monoxyde de carbone à la vapeur, encore appelée réaction de "Water Gas Shift" selon la terminologie anglo-saxonne.

D'autres problèmes rencontrés par l'homme du métier dans le domaine de l'invention concerne l'amélioration des rendements de production et des performances énergétiques et économiques de la chaîne de production à l'échelle industrielle tout en respectant les contraintes environnementales de plus en plus sévères.

Le brevet US 7,741,377 décrit un procédé de production d'hydrocarbures paraffiniques par voie de synthèse Fischer-Tropsch à partir d'une charge de solides carbonés, utilisant un gazéifieur qui contient un équipement de refroidissement intégré permettant de refroidir à une température comprise entre 500 et 900°C le gaz de synthèse issu du gazéifieur par l'injection d'un agent de refroidissement gazeux ou liquide, suivi d'un refroidissement dudit gaz de synthèse à une température inférieure à 500°C par contact direct avec l'eau. Ce brevet décrit également une étape de conversion du monoxyde de carbone à la vapeur sur au moins une partie du flux de gaz de synthèse purifié. Le brevet US 7,741,377 enseigne que la partie du flux de gaz de synthèse non soumise à la réaction de conversion du monoxyde de carbone à la vapeur est éventuellement lavée à l'eau.

La demande de brevet WO 2008/113766 décrit un procédé de production d'hydrocarbures par voie de synthèse Fischer-Tropsch consistant en une première étape de conversion d'un flux gazeux comprenant du méthane par oxydation partielle en un premier mélange d'hydrogène et de monoxyde de carbone ($H_2$+CO); parallèlement, une étape de conversion d'un flux de biomasse solide ou liquide par oxydation partielle en un deuxième mélange $H_2$+CO; une étape de réaction de conversion du monoxyde de carbone à la vapeur sur ledit deuxième mélange avant l'étape de synthèse Fischer-Tropsch proprement dite. La demande de brevet WO 2008/113766 enseigne que le premier mélange d'hydrogène et de monoxyde de carbone peut être combiné au deuxième mélange d'hydrogène et de monoxyde de carbone issu de la réaction de conversion du monoxyde de carbone à la vapeur avant l'étape de synthèse Fischer-Tropsch. WO 2007/134075 divulgue un procédé et une installation de production d'hydrocarbures par synthèse Fischer-Tropsch d'un syngas issu de la gasification de biomasse. Dans le cas de la présente invention, la demanderesse propose un nouveau procédé qui présente une intégration optimale des différentes étapes permettant d'atteindre des rendements de production améliorés et de meilleures performances énergétiques et économiques (efficacité énergétique, coût de production ... ) tout en respectant les contraintes environnementales telles que les émissions de gaz à effet de serre imposées à des seuils de plus en plus bas. Le procédé de l'invention intègre en particulier dans la chaîne du procédé une étape de fractionnement du gaz de synthèse issu du gazéifieur en au moins deux effluents, une première partie et une partie complémentaire, dans lequel ladite première partie est soumise à une étape d'élimination des composés halogénés, en particulier du chlore, sur au moins un lit de garde approprié avant d'être envoyée vers une étape de conversion du monoxyde de carbone à la vapeur; et ladite partie complémentaire est soumise à une étape d'hydrolyse catalytique du COS et du HCN avant une étape de recombinaison des deux effluents traités.

## DESCRIPTION SOMMAIRE DE L'INVENTION

La présente invention concerne un procédé intégré de production d'hydrocarbures liquides à partir d'une charge contenant au moins une fraction de biomasse et éventuellement au moins une fraction d'une autre charge, ledit procédé comprenant au moins les étapes suivantes:

a) une étape de prétraitement de la fraction de biomasse et éventuellement de la ou des autres fractions, comprenant au moins une des opérations a1), a2), a4):

- a1) séchage,
- a2) torréfaction,
- a4) broyage,

b) une étape éventuelle de combinaison de la fraction de biomasse prétraitée et de la ou des autres fractions de charge prétraitées ou non,
c) une étape de gazéification de l'effluent issu de l'étape b) et/ou de la fraction prétraitée issue de l'étape a) et éventuellement d'au moins une fraction d'une autre charge introduite directement à l'étape de gazéification dans un réacteur à flux entrainé,
d) une étape de conditionnement du gaz de synthèse issu de l'étape c) comprenant:

- une étape d1) de lavage à l'eau et de fractionnement dudit gaz de synthèse en au moins deux effluents : une première partie et une partie complémentaire,
- une étape d2) d'élimination des composés halogénés par passage de ladite première partie sur au moins un lit de garde adapté,
- une étape d3) de conversion du monoxyde de carbone à la vapeur réalisée sur l'effluent issu de l'étape d2),
- une étape d4) d'hydrolyse catalytique des composés COS et HCN contenus dans ladite partie complémentaire de l'effluent issu de l'étape d1) en $H_2S$ et $NH_3$,

e) une étape de recombinaison d'au moins une fraction de chacun des effluents issus des étapes d3) et d4),
f) une étape de lavage à l'eau de l'effluent recombiné issu de l'étape e) pour éliminer les impuretés telles que $NH_3$ et HCl,
g) une étape d'élimination des gaz acides contenus dans l'effluent de l'étape f) par un ou plusieurs solvants chimiques ou physiques, seuls ou en mélange,
h) une étape de purification finale sur au moins un lit de garde permettant d'adsorber les traces d'impuretés restantes dans le gaz de synthèse issu de l'étape g) telles que $H_2S$, COS, HCN et $NH_3$,
i) une étape de réaction catalytique de synthèse Fischer-Tropsch réalisée sur l'effluent issu de l'étape h).

Dans une variante du procédé selon l'invention, l'étape de prétraitement comprend une opération de granulation a3) mise en oeuvre après l'opération de torréfaction a2) et avant l'opération de broyage a4). Dans une autre variante, ladite opération de granulation a3) est mise en oeuvre avant l'opération de torréfaction a2).
Dans une variante du procédé selon l'invention, l'effluent issu de l'étape e) est préalablement soumis à une étape k) d'élimination des métaux lourds sur au moins un lit de garde adapté.
Avantageusement selon le procédé de l'invention, au moins une fraction de l'effluent issu de l'étape d3) de conversion du monoxyde de carbone à la vapeur est envoyée en mélange avec ladite partie complémentaire vers l'étape d'hydrolyse catalytique d4).
Selon le procédé de l'invention, ladite autre fraction de charge comprend avantageusement au moins une fraction de charge hydrocarbonée.
Selon le procédé de l'invention, l'étape i) de synthèse Fischer-Tropsch est avantageusement suivie d'une étape j) d'hydrotraitement et/ou d'isomérisation des coupes hydrocarbonées issues de l'étape i).
La présente invention concerne également une installation permettant de mettre en oeuvre le procédé selon l'invention qui comprend :

- au moins une unité de prétraitement (a) de la charge, comprenant une unité de séchage, une unité de torréfaction, éventuellement une unité de granulation, et une unité de broyage;
- éventuellement une unité de combinaison comprenant une conduite (b) permettant de réunir les effluents issus des différentes unités de prétraitement ;
- une unité de gazéification (c) des effluents prétraités comprenant au moins un réacteur à flux entraîné;
- une unité de conditionnement du gaz de synthèse comprenant :

- une unité de lavage à l'eau et de fractionnement du flux gaz permettant de diviser le flux de gaz de synthèse en au moins deux effluents;

- au moins un lit de garde permettant l'élimination des composés halogénés sur un desdits deux effluents situé en amont d'une unité de conversion du monoxyde de carbone à la vapeur;
- une unité d'hydrolyse catalytique;
- une unité de recombinaison (e) des effluents issus respectivement de l'unité de conversion du monoxyde de carbone à la vapeur et de l'unité d'hydrolyse catalytique ;

- une unité de lavage à l'eau de l'effluent issu de la unité de conditionnement du gaz de synthèse;
- une unité d'élimination des gaz acides contenus dans l'effluent lavé;
- une unité de purification finale de l'effluent lavé et désacidifié comprenant au moins un lit de garde;
- une unité réactionnelle de synthèse catalytique Fischer-Tropsch.

L'installation selon l'invention comprend avantageusement en outre au moins une unité d'hydrotraitement et/ou isomérisation des coupes hydrocarbonées issues de la unité réactionnelle de synthèse catalytique Fischer-Tropsch.

## DESCRIPTION SOMMAIRE DES FIGURES

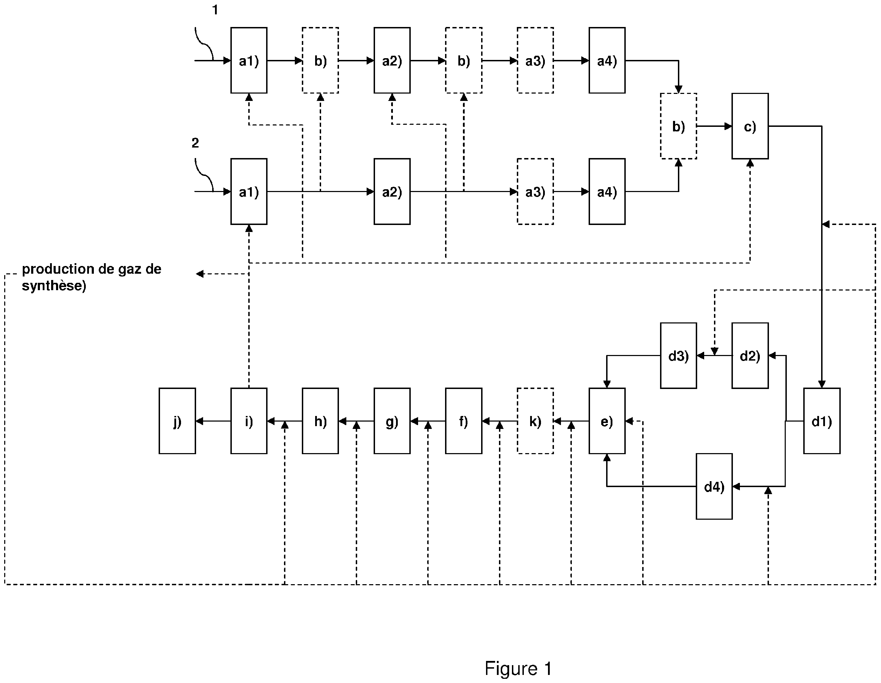

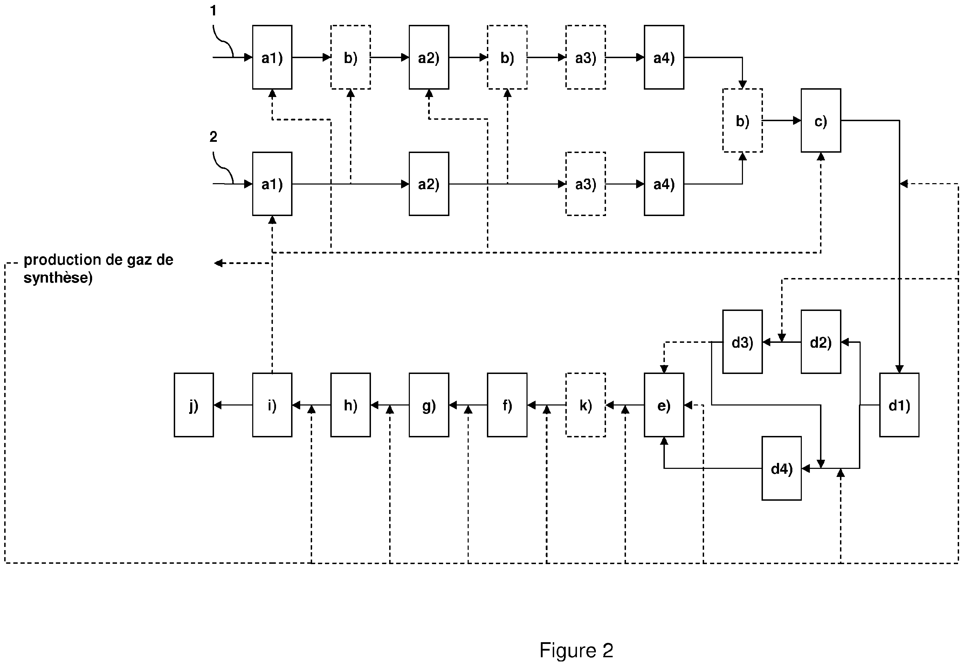

Les figures 1 et 2 décrivent un schéma global du procédé selon deux variantes préférées du procédé de l'invention.
La figure 1 décrit une première variante dans laquelle les effluents issus des unités d3) et d4) sont recombinés directement à l'étape e).
La figure 2 décrit une seconde variante dans laquelle au moins une partie de l'effluent issu de l'unité d3) est envoyée en mélange avec la partie complémentaire, issue de l'étape d1) de lavage à l'eau et de fractionnement du gaz de synthèse, vers l'unité d4).

## DESCRIPTION DETAILLEE DE L'INVENTION

### Types de charges

Le procédé selon l'invention est mis en oeuvre pour une charge comprenant au moins une fraction de biomasse et éventuellement au moins une fraction d'une autre charge. Selon l'invention, on entend par biomasse tout type de biomasse, de préférence de la biomasse de type solide, et en particulier de la biomasse de type lignocellulosique. Des exemples non limitatifs de types de biomasse concernent par exemple les résidus d'exploitation agricole (notamment paille, rafles de maïs), les résidus d'exploitation forestière, les produits de l'exploitation forestière, les résidus de scieries, les cultures dédiées par exemple taillis à courte rotation.
La charge du procédé selon l'invention peut comprendre en outre au moins une fraction d'une autre charge, de préférence au moins une fraction de charge hydrocarbonée gazeuse, solide et/ou liquide ("co-processing" selon la terminologie anglo-saxonne). Ladite fraction de charge hydrocarbonée est entendue dans le cadre de la présente invention comme étant une fraction de charge pouvant avantageusement contenir au moins du charbon, du coke de pétrole (petcoke selon la terminologie anglo-saxonne), du gaz naturel, des résidus pétroliers, des pétroles bruts, des pétroles bruts étêtés, des huiles désasphaltées, des asphaltes de désasphaltage, des dérivés de procédés de conversion du pétrole (comme par exemple : HCO/Slurry de FCC, GO lourd/VGO de coking, résidu de viscoréduction ou procédé thermique similaires, etc....), des sables bitumineux ou leurs dérivés, des gaz de schistes et des schistes bitumineux ou leurs dérivés, de la biomasse liquide (comme par exemple : l'huile de colza, l'huile de palme, l'huile de pyrolyse, ...), de la biomasse en slurry selon la terminologie anglo-saxone correspondant à un mélange de biomasse liquide avec une charge hydrocarbonée solide. Selon le procédé de l'invention, ladite fraction de charge hydrocarbonée peut être une fraction de charge hydrocarbonée gazeuse, solide, liquide ou leur mélange.
La charge du procédé selon l'invention peut donc être une charge comprenant au moins une fraction de biomasse solide, et éventuellement au moins une fraction d'une autre charge gazeuse, solide ou liquide seul ou en mélange.
De manière générale, la charge utilisée dans le procédé de l'invention comprend au moins 20%, de préférence au moins 50%, de manière préférée au moins 70%, et de manière plus préférée au moins 90% de fraction biomasse. Les différentes étapes du procédé selon l'invention sont décrites ci-dessous.

### a) étape de prétraitement de la charge

L'étape a) de prétraitement de la charge selon l'invention comprend au moins une des opérations de séchage a1), de torréfaction a2), éventuellement de granulation a3), de broyage a4) décrites ci-après. La charge introduite dans le procédé de l'invention peut également être pré-conditionnée avant ladite étape de prétraitement, par exemple par une étape permettant de déstructurer la biomasse pour les incorporer plus facilement dans les opérations de séchage a1) ou de torréfaction a2) ou de granulation a3) ou de broyage a4). Lorsque la fraction de charge hydrocarbonée est une fraction de charge hydrocarbonée gazeuse ou liquide, celle-ci est avantageusement introduite directement à l'étape c) de gazéification sans être soumise à l'étape a) de prétraitement.

### a1) Opération de séchage

L'étape a) de prétraitement de la charge selon l'invention comprend une première opération de séchage a1) de la charge réalisée avantageusement à une température comprise entre 20 et 180°C, de préférence entre 60 et 160°C et préférentiellement entre 100 et 140°C pendant une durée comprise entre 5 et 180 minutes et préférentiellement entre 15 et 60 minutes. A l'entrée de l'opération de séchage a1), la charge comprend généralement une teneur en eau comprise entre 15 et 80 % masse. La teneur en eau résiduelle dans la charge à l'issu de l'opération de séchage est avantageusement inférieure à 25% masse, de préférence inférieure à 15 % masse et de manière plus préférée inférieure à 10 % masse. L'opération de séchage peut être réalisée par tout moyen connu de l'homme du métier.

Dans une variante du procédé selon l'invention, l'opération de séchage a1) est réalisée au moins en partie grâce à l'énergie apportée par la combustion de gaz naturel.

Dans une autre variante du procédé selon l'invention, l'opération de séchage a1) est réalisée au moins en partie grâce à l'énergie de combustion de la fraction gazeuse issue de l'opération a2) de torréfaction permettant ainsi de réduire la consommation de gaz naturel dans le procédé.

Dans une autre variante du procédé selon l'invention, l'opération de séchage a1) est réalisée au moins en partie grâce à l'énergie de combustion de la fraction gazeuse issue de l'étape i) de synthèse Fischer-Tropsch permettant ainsi de réduire la consommation de gaz naturel dans le procédé.

Dans une configuration avantageuse, il est possible de combiner au moins deux des trois variantes décrites ci-dessus.

### a2) Opération de torréfaction

L'opération de séchage de la charge selon l'invention est suivie par une opération de torréfaction a2) réalisée dans un four de torréfaction qui produit un effluent de charge plus friable, et par conséquent nécessitant moins d'énergie pour être finement broyée. L'opération de torréfaction est avantageusement réalisée à une température comprise entre 220 et 350°C, de préférence entre 250 et 320°C et plus préférentiellement entre 270 et 300°C pendant une durée comprise entre 5 et 180 minutes, et préférentiellement entre 15 et 60 minutes, à une pression opératoire absolue comprise préférentiellement entre 0,1 et 15 bar, de manière préférée entre 0,1 et 10 bar et de manière plus préférée entre 0,5 et 1,5 bar (1bar = 0,1 MPa). L'opération de torréfaction est réalisée dans un environnement dont la teneur en oxygène est avantageusement inférieure à 10 % volume, de préférence inférieure à 8 % volume et préférentiellement inférieure à 3 % volume.

L'opération de torréfaction présente l'avantage de diminuer le coût énergétique de l'opération a4) de broyage et s'accompagne d'une perte de matière sèche comprise entre 5 et 40% masse, de préférence entre 10 et 35% masse. Cependant, cette perte de matière sèche s'accompagne d'une perte de pouvoir calorifique beaucoup plus limitée de l'ordre de 5 à 20 %. A ce titre, l'opération de torréfaction permet d'augmenter le contenu énergétique volumique de la biomasse, c'est-à-dire son énergie par unité de volume.

L'opération de torréfaction conduit par ailleurs à la production de gaz contenant de l'eau, des acides tels que l'acide acétique et formique, des aldéhydes comme le furfural, des alcools (méthanol, ...) du CO, du $CO_2$. Ainsi, dans une variante du procédé selon l'invention, ces gaz sont acheminés dans une chambre de combustion où ils sont brulés en présence d'air et éventuellement en présence de gaz naturel. Ladite chambre de combustion peut être indépendante du four de torréfaction. L'énergie des gaz issus de ladite chambre de combustion peut être selon l'invention recyclée pour le chauffage du four de torréfaction. Dans une autre variante du procédé selon l'invention, une intégration thermique avec l'unité de séchage est réalisé. Dans une configuration avantageuse, la fraction gazeuse issue de l'étape i) de synthèse Fischer-Tropsch pourra au moins en partie être utilisée comme combustible dans ladite chambre de combustion. Les intégrations énergétiques mentionnées ci-dessus peuvent être réalisées par tout moyen ou technique connus de l'homme du métier.

### a3) Opération éventuelle de granulation

Selon le procédé de l'invention, l'étape de prétraitement peut comprendre une opération de granulation a3) mise en oeuvre préférentiellement après l'opération de torréfaction a2) et avant l'opération de broyage a4). Dans le cas de la paille ou de matière herbeuse, l'opération de granulation a3) est avantageusement mise en oeuvre avant l'opération de torréfaction a2). L'opération a3) de granulation a pour objectif de mettre la charge sur la forme de granulés de taille et forme homogénéisées et avec une masse volumique apparente augmentée. Cette opération permet de faciliter le transport éventuel de cette charge ainsi que sa manipulation dans la suite du procédé.

De façon préférée un broyage intégré à l'opération de granulation a3) permettra d'obtenir des particules dont le diamètre sera inférieur au diamètre du granulé, de préférence inférieur au tiers du diamètre du granulé afin de favoriser la cohésion des particules lors de l'opération de granulation. A titre d'exemple, la granulation permet d'augmenter la masse volumique apparente de 200 kg/m$^3$ dans le cas de particules de bois à environ 600 kg/m$^3$ pour des granulés de bois.

### a4) Opération de broyage

L'opération de broyage a4) du procédé selon l'invention est réalisée dans des conditions permettant une réduction de la charge en particules de taille convenant au traitement dans une unité de gazéification en flux entraîné (étape c). A l'issue de l'opération de broyage a4), 90 % des particules de charge présentent de préférence un diamètre équivalent inférieur à 300 microns et 90 % des particules de charge présentent de préférence un diamètre équivalent supérieur à 1 micron; de manière préférée 90 % des particules de charge présentent un diamètre équivalent inférieur à 200 microns et 90 % des particules de charge présentent un diamètre équivalent supérieur à 5 microns; et de manière plus préférée 90 % des particules de charge présentent un diamètre équivalent inférieur à 100 microns et 90 % des particules de charge présentent un diamètre équivalent supérieur à 10 microns. Le diamètre équivalent noté $d_e$ est défini par exemple selon la relation suivante :

$$d_e = 6 . \frac{V}{S}$$

avec V le volume de la particule,

S la surface de la sphère de même volume que la particule.

### b) Étape b) éventuelle de combinaison

Dans le cas où la charge du procédé selon l'invention comprend en outre au moins une fraction d'une autre charge, de préférence une fraction de charge hydrocarbonée, cette dernière peut être prétraitée selon au moins une des opérations a1), a2), a3) et a4), quelque soit l'ordre dans lequel les opérations a1), a2), a3) et a4) sont réalisées.

Dans un mode de réalisation du procédé, les opérations a1), a2), a3) et a4) sont réalisées de manière successive.

Dans un mode de réalisation du procédé de l'invention, ladite autre fraction de charge n'est pas prétraitée.

Dans une variante, ladite autre fraction de charge, de préférence une fraction de charge hydrocarbonée est prétraitée selon les opérations a1) et a4).

Les opérations a1), a2), a3) et a4) de l'étape de prétraitement de ladite autre fraction de charge, de préférence une fraction de charge hydrocarbonée peuvent être communes ou non communes aux opérations a1), a2), a3), a4) de prétraitement de la fraction de biomasse.

Dans le cas où la fraction de biomasse est prétraitée séparément de la fraction de charge hydrocarbonée, c'est à dire dans des unités distinctes, le procédé comporte une étape b) de combinaison des effluents de charges prétraitées. Ladite étape b) de combinaison peut intervenir à plusieurs niveaux du processus de prétraitement de la charge selon différentes variantes du procédé de l'invention.

Dans une variante du procédé selon l'invention, la fraction de biomasse et la fraction de charge hydrocarbonée sont séchées (a1), torréfiées (a2), éventuellement granulées (a3) et broyées (a4) séparément et combinées (b) après broyage (a4), avant l'étape c) de gazéification.

Dans une autre variante du procédé selon l'invention, la fraction de biomasse et la fraction de charge hydrocarbonée sont séchées (a1) séparément et combinées (b) avant torréfaction (a2). Dans un tel cas, l'opération de torréfaction est réalisée sur l'effluent issu de l'étape b) de combinaison.

Dans une autre variante du procédé selon l'invention, la fraction de biomasse et la fraction de charge hydrocarbonée sont séchées (a1), torréfiées (a2) séparément et combinées (b) avant l'opération de broyage (a4).

Dans une autre variante du procédé selon l'invention, la fraction de biomasse et la fraction de charge hydrocarbonée sont séchées (a1) séparément, la fraction de biomasse est ensuite torréfiée (a2), puis la fraction de charge hydrocarbonée séchée et la fraction de biomasse séchée et torréfiée sont combinées (b) avant l'opération de broyage (a4).

Dans une autre variante du procédé selon l'invention, au moins trois des quatre opérations de prétraitement a1), a2), a3) et a4) de la charge selon l'invention peuvent être réalisées en même temps, de préférence dans une même unité de traitement.

L'étape de combinaison b) présente l'avantage d'homogénéiser la charge dirigée vers le gazéifieur, d'avoir une quantité d'énergie par unité de temps stable et constante et de maximiser la conversion carbone dans l'étape de gazéification c).

**c) Étape c) de gazéification**

Selon le procédé de l'invention, l'étape a) de prétraitement de la ou des charges, éventuellement suivie de l'étape de combinaison b), est suivie d'une étape c) de gazéification.

L'étape de gazéification met en oeuvre une réaction d'oxydation partielle qui convertit la charge en un gaz de synthèse comprenant majoritairement du monoxyde de carbone et de l'hydrogène. L'étape de gazéification s'opère avantageusement en présence d'une quantité maitrisée d'oxygène sous la forme d'un flux dont le débit est contrôlé et contenant au moins 90% volume d'oxygène, de préférence au moins 96% volume d'oxygène.

L'étape c) de gazéification de la charge est réalisée dans un gazéifieur de type lit fixe, ou lit fluidisé ou de façon préférée dans un gazéifieur à flux entrainé à paroi refroidie à haute température, c'est-à-dire à une température comprise entre 800 et 1800°C, de préférence entre 1000 et 1600°C et plus préférentiellement entre 1200 et 1500°C et à une pression absolue avantageusement comprise entre 20 et 120 bar, de préférence entre 25 et 60 bar, et plus préférentiellement entre 30 et 50 bar. La haute température permet d'obtenir un taux de conversion du carbone élevé et donc de réduire la quantité de carbone non converti dans les cendres produites et ainsi de réduire la quantité de cendres recyclées vers le gazéifieur.

Selon l'état solide, liquide ou gazeux de la charge, le mode d'introduction dans l'étape c) peut varier. Pour les charges solides, un flux gazeux, à titre d'exemple du $CO_2$ ou de l'azote, de façon préférée du $CO_2$ est avantageusement rajouté à la charge pour effectuer son transport pneumatique et la pressurisation de ladite charge dans le gazéifieur. Dans les cas des charges liquides ou slurry, celles-ci sont introduites dans le gazéifieur par l'intermédiaire de pompes. Quant aux charges gazeuses, elles sont comprimées à une pression supérieure à celle du gazéifieur afin de pouvoir être injectées dans la chambre de gazéification.

Le gazéifieur à flux entraîné est de façon préférée un gazéifieur connu par l'homme du métier sous l'appellation gazéifieur à flux entraîné à paroi refroidie. La paroi refroidie délimite la chambre de gazéification située elle-même dans le gazéifieur. L'eau utilisée pour le refroidissement de la paroi de la chambre de gazéification circule dans un serpentin placé à l'extérieur de la paroi de la chambre de gazéification. L'eau est partiellement vaporisée générant ainsi un flux de vapeur moyenne pression. Ce refroidissement des parois permet la formation d'une couche de cendres protectrices sur la paroi interne de la chambre de gazéification. En effet, les charges introduites dans le gazéifieur contiennent des composés inorganiques, qui forment des cendres après gazéification. A la température de gazéification, ces cendres liquides, sous forme de gouttelette, se solidifient lorsqu'elles rencontrent la paroi refroidie et forment une couche solide jouant le rôle d'isolant. Ainsi, la protection thermique de la paroi de la chambre de gazéification est assurée d'une part, par une couche de cendres solidifiées et, d'autre part, par une couche de cendres fondues, en contact avec la phase gaz, s'écoulant vers le fond du gazéifieur. La paroi de la chambre de combustion est ainsi très résistante aux hautes températures et aux fortes variations de température. De plus, de par leur composition, notamment leur forte teneur en composés alcalins, les cendres issues de la biomasse présentent un caractère corrosif pour les revêtements de type réfractaires. Par conséquent, les technologies de gazéification utilisant des réfractaires internes comme protection des parois sont difficilement opérables à cause de leur détérioration rapide, ce qui nécessite un renouvellement fréquent. De plus les réfractaires sont très sensibles aux chocs thermiques qui détruisent cette couche de protection par fracturation.

Dans le gazéifieur à flux entraîné à paroi refroidie, au moins deux brûleurs et de préférence quatre brûleurs ou plus en fonction de la capacité du gazéifieur, sont disposés dans la chambre de gazéification dont les parois sont refroidies et qui fonctionnent à une température suffisante pour permettre la fusion des cendres contenues dans la charge. Par ailleurs, les charges introduites dans le gazéifieur peuvent avoir des propriétés très différentes. A titre d'exemple le pouvoir calorifique inférieur (PCI) d'une biomasse est plus faible que celui d'un petcoke, la teneur en cendres d'une biomasse peut être très inférieure à celle d'un charbon et le point de fusion des cendres peut varier fortement d'une biomasse à une autre. Ainsi, le point de fusion des cendres peut varier selon la composition de la charge introduite dans la chambre de gazéification. De même, la température de gazéification minimale pour se placer au-dessus du point de fusion des cendres peut être ajustée en jouant sur la nature des charges, de propriétés différentes, et les proportions des différents constituants (autre biomasse, autre charge hydrocarbonée, ...) et/ou par injection de fluxant (par exemple du calcaire) avec la charge.

Dans une version préférée de l'invention, le gaz de synthèse produit dans la chambre de gazéification sort de celle-ci de façon co-courante aux cendres liquides s'écoulant vers le fond du gazéifieur. Cette configuration à co-courant présente l'avantage, vis à vis d'une configuration où le gaz de synthèse est évacué de la chambre de gazéification vers le haut alors que les cendres liquides s'écoulent vers le bas, d'éviter les risques de bouchages de la conduite d'évacuation des cendres liquides. En effet, les cendres liquides s'écoulant seules dans la conduite peuvent, en fonction de leur viscosité s'écouler avec difficulté et/ou en partie se solidifier obstruant partiellement ou totalement la conduite d'évacuation et entrainant un arrêt de l'installation pour maintenance. Ces phénomènes peuvent particulièrement arriver lors de phases transitoires de montées ou de descentes en température ou lors d'ajustements liés à un changement de la nature de la charge. La configuration selon l'invention présente l'avantage que le gaz s'écoulant à co-courant avec les cendres liquides dans la conduite d'évacuation de la chambre de gazéification facilite l'écoulement de ces cendres vers le fond du gazéifieur et évite les risques de bouchages même dans les phases transitoires.

Dans une version préférée de l'invention, le gaz de synthèse et les cendres liquides passent dans une zone de quench liquide intensif au contact au moins d'un film d'eau comme décrit dans la demande de brevet DE 102007044726. Cette zone de quench est positionnée sous la chambre de gazéification et sépare une zone chaude et sèche en haut et une zone plus froide et humide en bas. La zone chaude et sèche située sous la chambre de gazéification est caractérisée par la présence de gaz de synthèse et de cendres liquides s'écoulant vers le fond du gazéifieur. La partie plus froide et humide est située sous la zone chaude et sèche et est caractérisée par la présence de gaz de synthèse saturé en eau, de cendres solidifiées et d'eau liquide. La température du gaz de synthèse à la sortie de la zone froide et humide correspond à la température de l'équilibre thermodynamique entre la phase gaz et la phase liquide à la pression opératoire du gazéifieur.

Cette configuration avec quench présente le double avantage d'une part de saturer le gaz de synthèse par de l'eau, opération nécessaire à l'étape d3) de réaction de conversion du monoxyde de carbone à la vapeur; d'autre part, cette configuration permet une élimination des fines particules collantes de cendres entraînées lors du lavage du gaz de synthèse, réduisant ainsi les risques d'encrassement dans les tuyauteries et les unités en aval. Par ailleurs, la température élevée dans la chambre de gazéification permet aux cendres fondues de s'écouler facilement vers le bas sur la paroi de celle-ci avant de tomber dans la zone de quench. Après être passées dans l'unité froide et humide, les cendres refroidies finissent dans le fond du gazéifieur rempli d'eau. Au contact de l'eau, ces cendres fondues sont immédiatement refroidies et vitrifiées en particules denses. Ces particules sont ensuite extraites du gazéifieur sous forme de mélange d'eau et de cendres solides (ou slurry selon la terminologie anglo-saxonne) par dépressurisation. La majeure partie des composés minéraux contenus dans la charge forment les cendres fondues. Cette configuration permet avantageusement d'encapsuler les produits dangereux comme les métaux lourds dans les cendres vitrifiées. Le processus de vitrification rend ces cendres très stables, elles ne sont pas lixiviables,

Dans une version alternative de l'invention, le gaz de synthèse produit sort de la chambre de gazéification par le haut alors que les cendres fondues s'écoulent le long de la paroi à contre courant du gaz de synthèse jusqu'au au fond du gazéifieur rempli d'eau. Au contact de l'eau, les cendres fondues se solidifient brutalement formant des particules de petites tailles. Ces particules sont ensuite extraites du gazéifieur sous forme de slurry (mélange d'eau et de cendres solides) par dépressurisation. La majeure partie des composés minéraux contenus dans la charge formant les cendres fondues, cette configuration permet avantageusement d'encapsuler les produits dangereux comme les métaux lourds dans les cendres vitrifiées. Le processus de vitrification rend ces cendres très stables, elles ne sont pas lixiviables. Ledit gaz de synthèse sortant de la chambre de gazéification par le haut et les plus fines particules de cendres fondues entrainées avec celui-ci sont refroidis par un flux de gaz de synthèse refroidi et dépourvu de particules solides. Ce refroidissement permet de solidifier les cendres fondues en particules solides non collantes. Après cette première étape de refroidissement préliminaire, le gaz de synthèse est dirigé vers un échangeur de chaleur permettant de produire de la vapeur. Afin d'éliminer les fines particules solides, le gaz de synthèse passe ensuite à travers une section de séparation de la phase gaz et de la phase solide utilisant toute technique connue de l'homme du métier, par exemple des filtres à cartouche. Une partie de ce gaz de synthèse refroidi et dépourvu de particules est recyclée vers la sortie du gazéifieur pour refroidir le gaz de synthèse sortant en tête du gazéifieur.

### d) Étape d) de conditionnement du gaz de synthèse

Selon le procédé de l'invention, le gaz de synthèse issu de l'étape de gazéification c) est soumis à une étape de conditionnement d). Le gaz de synthèse issu de l'étape c) de gazéification est composé majoritairement de monoxyde de carbone (CO), d'hydrogène ($H_2$), de dioxyde de carbone ($CO_2$), d'eau ($H_2O$), et comprend des impuretés provenant initialement de la fraction de biomasse et/ou de la fraction d'une autre charge, notamment de charge hydrocarbonée. Ces impuretés sont essentiellement des métaux en particulier alcalins (Na, K), des composés soufrés, ainsi que des composés chlorés et azotés. Particulièrement, les composés halogénés initialement présents dans la charge selon l'invention peuvent atteindre des teneurs d'au moins 250 ppm masse dans la fraction de charge hydrocarbonée brute (avant séchage), et d'au moins 10000 ppm masse dans le cas de la fraction de biomasse brute (avant séchage).

### - Étape d1) de lavage à l'eau et de fractionnement du gaz de synthèse

Ainsi, selon l'invention, le gaz de synthèse issu de l'étape c) de gazéification est avantageusement soumis à une étape d1) de lavage à l'eau pour éliminer les traces de solide dans le gaz de synthèse ainsi qu'une partie des composés gazeux solubles dans l'eau. Cette opération peut se faire par tout type de technique connue de l'homme du métier parmi lesquelles le laveur à eau avec effet venturi ou venturi scrubber selon la terminologie anglo-saxonne, la colonne de lavage avec tous types d'internes etc...

En sortie de l'étape de lavage à l'eau, le gaz de synthèse est soumis à une étape de fractionnement en au moins deux effluents, une première partie et une partie complémentaire soumises aux étapes suivantes :

- une étape d2) d'élimination des composés halogénés par passage de ladite première partie sur au moins un lit de garde adapté ;
- une étape d3) de conversion du monoxyde de carbone à la vapeur réalisée sur l'effluent issu de l'étape d2);
- une étape d4) d'hydrolyse catalytique des composés COS et HCN contenus dans ladite partie complémentaire de l'effluent issu de l'étape d1) en $H_2S$ et $NH_3$.

Il a été constaté par la demanderesse que le fractionnement de l'effluent issu de l'étape d1) en au moins deux effluents traités séparément permettait de réduire considérablement les coûts liés à la taille des unités de traitement et la quantité des catalyseurs mis en oeuvre. L'absence d'étape de fractionnement du flux de gaz de synthèse imposerait des étapes de traitement du gaz qui interviendraient alors sur l'ensemble du flux de l'effluent issu de l'étape d1). Dans ce dernier cas, l'étape d'hydrolyse catalytique de COS et HCN serait par exemple réalisée sur l'ensemble du flux de gaz, or la quantité de catalyseur à mettre en oeuvre est imposée par la quantité de gaz à traiter. Le fractionnement de l'effluent permet cependant d'obtenir des effluents séparés de débits moindres (somme des débits en gaz sec étant au plus égale au débit total gaz sec avant fractionnement). Plus particulièrement dans le procédé selon l'invention, seule la partie complémentaire ne subissant pas l'étape de conversion du monoxyde de carbone à la vapeur est soumise à une étape d'hydrolyse catalytique de COS et HCN. La partie complémentaire soumise à l'étape d'hydrolyse de COS et HCN étant considérablement réduite, ceci permet de diminuer de manière proportionnelle la taille de l'unité ainsi que la quantité de catalyseur nécessaire à la réalisation de ladite étape d'hydrolyse.

D'une manière plus générale, les effluents dits première partie et partie complémentaire issus de l'étape d1) de lavage à l'eau et de fractionnement du gaz de synthèse sont soumis à des étapes de traitement distinctes. La première partie est soumise à une étape d2) d'élimination de composés halogénés et une étape d3) de conversion du monoxyde de carbone à la vapeur; alors que la partie complémentaire est soumise à une étape d4) d'hydrolyse catalytique des composés COS et HCN en $H_2S$ et $NH_3$. Le fractionnement du gaz de synthèse ainsi que le traitement des effluents de manière séparée et distincte permet la réduction de la taille des unités et des quantités de catalyseurs mises en oeuvre dans lesdites unités.

Selon le procédé de l'invention, les proportions respectives de ladite première partie de l'effluent issu de l'étape d1) et de ladite partie complémentaire sont avantageusement déterminées afin d'obtenir un effluent en sortie d'étape h) qui alimente l'étape i) de Fischer-Tropsch avec un rapport molaire $H_2/CO$ avantageusement compris entre 0,5 et 4, de préférence entre 1 et 3, de manière plus préférée entre 1,5 et 2,5.

De manière générale, ladite première partie de l'effluent issu de l'étape d1) est au moins comprise entre 20 et 80% volume, de préférence entre 30 et 70% volume, de manière plus préférée entre 40 et 60% volume de l'effluent total de gaz de synthèse issu de l'étape d1).

**- Étape d2) d'élimination des composés halogénés**

Selon le procédé de l'invention, une étape d2) d'élimination des composés halogénés sur au moins un lit de garde adapté est réalisée sur la première partie de l'effluent issu de l'étape d1). L'étape d2) permet d'éliminer substantiellement les composés halogénés, avantageusement le chlore, contenus dans ladite première partie de l'effluent avant que cette dernière ne soit envoyée dans une unité de conversion du monoxyde de carbone à la vapeur (étape d3). La technologie de réacteur à lit fixe sera avantageusement privilégiée pour capter les composés halogénés, notamment le chlore contenu dans le gaz de synthèse de ladite première partie, à l'aide de masses de captation connues de l'homme du métier. Avantageusement, l'étape d2) est réalisée sur au moins un lit de garde en présence d'une masse de captation contenant une phase active de type zéolithe, et/ou de l'oxyde de zinc, et/ou un oxyde basique tel qu'une alumine. La phase active peut être dopée ou promue par un ou plusieurs composés d'éléments alcalins et/ou alcalino-terreux et/ou terres rares. La phase active peut, par exemple, être une alumine promue par un composé du sodium, par exemple par $Na_2O$. Dans le cadre de l'invention, le passage de la première partie de l'effluent issu de l'étape d1) dans au moins un lit de garde permet d'atteindre les spécifications requises pour l'unité de conversion du monoxyde de carbone à la vapeur d3). A la sortie de l'étape d2) d'élimination des composés halogénés, l'effluent contient généralement moins de 10 ppm volume de chlore, avantageusement moins de 5 ppm volume de chlore, de manière préférée entre 0,1 ppm et 5 ppm volume de chlore, de manière plus préférée entre 1 ppm et 3 ppm volume de chlore, et de manière encore plus préférée entre 1 ppm et 2 ppm volume de chlore.

## - Étape d3) de conversion du monoxyde de carbone à la vapeur

L'étape de gazéification c) de la charge selon l'invention telle que celle mise en oeuvre dans la présente invention peut conduire à une production d'hydrogène et de monoxyde de carbone dans un rapport molaire $H_2/CO$ non optimal pour la réaction de Fischer-Tropsch, particulièrement lorsque le catalyseur utilisé est un catalyseur à base de cobalt qui nécessite avantageusement un rapport molaire $H_2/CO$ optimal d'environ 2 pour être orienté vers la production de distillats moyens.

Afin d'atteindre le rapport molaire $H_2/CO$ requis par la synthèse Fischer-Tropsch, l'effluent issu de l'étape d2) d'élimination des composés halogénés est selon l'invention, dirigé vers une section de conversion du monoxyde de carbone à la vapeur d3) permettant de produire un flux gazeux riche en hydrogène et appauvri en monoxyde de carbone. L'étape de réaction de conversion du monoxyde de carbone à la vapeur d3) est avantageusement réalisée à une température d'entrée proche de la température du gaz de synthèse issu de l'étape de lavage à l'eau et de fractionnement d1) permettant de réduire la consommation d'énergie sur l'ensemble de la chaîne de valorisation de la biomasse. De manière préférée, l'étape d3) est réalisée à une température d'entrée comprise entre 150 et 280 °C, de préférence entre 200 et 280°C..

Avantageusement, l'étape de réaction de conversion du monoxyde de carbone à la vapeur d3) est réalisée à une pression absolue comprise entre 20 et 120 bar, de préférence entre 25 et 60 bar, et plus préférentiellement entre 30 et 50 bar; à une vitesse volumique horaire VVH (volume de charge/volume de catalyseur/heure) comprise entre 1000 et 10000 $h^{-1}$, de préférence entre 1000 et 9000 $h^{-1}$ et de manière plus préférée entre 1500 et 8500 $h^{-1}$; à une température comprise entre 150 et 550°C, de préférence entre 200 et 550°C, et de manière plus préférée entre 250 et 500°C.

Le catalyseur mis en oeuvre dans cette étape d3) est un catalyseur comprenant au moins un élément du groupe VIII et/ou au moins un élément du groupe VIB de la classification périodique de Mendeleïev (le groupe VIII correspond au groupe 8, 9 et 10, et le groupe VIB au groupe 6 selon la nouvelle notation de la classification périodique des éléments : Handbook of Chemistry and Physics, 81ème édition, 2000-2001). De préférence, le catalyseur est un catalyseur comprenant du cobalt sulfuré et/ou du molybdène sulfuré, Le support du catalyseur est habituellement un solide poreux choisi dans le groupe constitué par les alumines, la silice, les silices alumines. Préférentiellement, le support du catalyseur est l'alumine. Le catalyseur utilisé peut être promu avec un promoteur alcalin ou alcalino-terreux. La réaction de conversion du monoxyde de carbone permet d'augmenter considérablement la teneur en hydrogène dans l'effluent dirigé vers l'étape i) de synthèse Fischer-Tropsch.

Si besoin, un apport d'eau sous forme liquide, de préférence sous forme vapeur et préférentiellement sous forme de vapeur surchauffée pourra être effectué en amont de l'étape de conversion du monoxyde de carbone à la vapeur pour ajuster le ratio $H_2O/CO$ à l'entré de l'unité de l'étape d3). Avantageusement, l'étape d3) est mise en oeuvre avec une ratio $H_2O/CO$ compris entre 0,5 et 100, de manière préférée entre 0,5 et 25, de manière plus préférée entre 1,5 et 10. En raison du caractère exothermique de la réaction de conversion du monoxyde de carbone à la vapeur, l'effluent gazeux issu de cette étape présente une température comprise entre 250 et 550°C. Cet effluent gazeux est avantageusement refroidi à la température d'opération de l'unité d'hydrolyse entre 100 et 400°C, de préférence entre 200 et 350°C. Ce refroidissement se fait avantageusement en générant de la vapeur d'eau qui pourra être utilisée soit dans la chaîne du procédé selon l'invention, soit pour produire de l'électricité.

Dans une variante du procédé selon l'invention, le rapport molaire $H_2/CO$ du flux gazeux entrant dans l'étape i) de synthèse Fischer-Tropsch peut être ajusté à son niveau optimal d'environ 2 pour être orienté vers la production de distillats moyens par ajout d'un flux gazeux externe riche en hydrogène produit par tout moyen connu de l'homme du métier parmi lesquels : l'électrolyse de l'eau, le vaporéformage de gaz naturel à la vapeur suivi d'une étape de séparation par adsorption à variation de pression PSA "Pressure Swing Adsorption" selon la terminologie anglo-saxonne, ou par adsorption par variation de température TSA "Temperature Swing Adsorption" selon la terminologie anglo-saxonne ou par séparation membranaire. Ce flux gazeux riche en hydrogène peut être injecté en tout point de la chaîne situé en aval de l'étape de gazéification c) et permet de réduire la taille de l'étape d3) de conversion du monoxyde de carbone à la vapeur.

Dans une variante du procédé selon l'invention, une partie du gaz issu de l'étape d3) de conversion du monoxyde de carbone à la vapeur mais aussi éventuellement en amont ou en aval de ladite étape d3) peut être avantageusement envoyée dans une unité de production d'hydrogène réalisée par tout moyen connu de l'homme du métier, de préférence par adsorption à variation de pression PSA "Pressure Swing Adsorption" selon la terminologie anglo-saxonne, ou par adsorption par variation de température TSA "Temperature Swing Adsorption" selon la terminologie anglo-saxonne ou par séparation membranaire. L'hydrogène produit est avantageusement utilisé dans l'étape j) d'hydrotraitement et/ou d'isomérisation.

## - étape d4) d'hydrolyse catalytique des composés COS et HCN

Selon le procédé de l'invention, la partie complémentaire issue de l'étape d1) est soumise à une étape d'hydrolyse catalytique du COS et HCN en $H_2S$ et $NH_3$ (étape d4). Cette étape permet l'élimination du COS et HCN qui sont des poisons pour le catalyseur de synthèse Fischer-Tropsch. L'étape d'hydrolyse catalytique de l'oxysulfure de carbone (COS) et du cyanure d'hydrogène (HCN) est selon l'invention avantageusement mise en oeuvre en présence d'un catalyseur contenant un composé à base de platine, ou un oxyde d'un élément choisi dans le groupe comprenant le titane, le zirconium, l'aluminium, le chrome, le zinc, ou leur mélange.

De manière préférée, le catalyseur d'hydrolyse est un catalyseur à base d'oxyde de titane. Le catalyseur utilisé peut également contenir au moins des métaux alcalins, alcalino-terreux et/ou des terres rares, issus par exemple de précurseurs tels que la potasse, l'oxyde de zirconium, le carbonate de sodium ou de baryum, le bicarbonate de sodium ou de baryum, le sulfate de calcium, l'acétate de sodium ou de baryum, l'oxalate de sodium ou de baryum. L'étape d'hydrolyse est avantageusement réalisée à une température comprise entre 100 et 400°C, de préférence entre 200 et 350°C.

Avantageusement, l'effluent en sortie de l'unité d'hydrolyse de l'étape d4) contient moins de 25 ppm volume de COS et moins de 5 ppm volume de HCN, de manière préférée moins de 10 ppm volume de COS et moins de 1 ppm volume de HCN, et de manière plus préférée moins de 5 ppm volume de COS et moins de 0,1 ppm volume de HCN.

Dans une variante du procédé selon l'invention, l'effluent issu de l'étape de conversion du monoxyde de carbone à la vapeur d3) est au moins en partie envoyé en mélange avec ladite partie complémentaire vers l'étape d'hydrolyse catalytique du COS et HCN en $H_2S$ et $NH_3$ (étape d4). Avantageusement, l'effluent issu de l'étape de conversion du monoxyde de carbone à la vapeur d3) est envoyé en mélange avec ladite partie complémentaire vers l'étape d'hydrolyse catalytique (étape d4) après refroidissement à la température préférentiellement comprise entre 100 et 400°C, de préférence entre 200 et 350°C.

De manière préférée, la proportion de l'effluent issu de l'étape d3) envoyé en mélange avec ladite partie complémentaire est comprise entre 20 et 90 % volume, de préférence entre 40 et 80 % volume, préférentiellement entre 50 et 70 % volume.

## e) Étape e) de recombinaison

Selon le procédé de l'invention, au moins une fraction de l'effluent issu de l'étape de conversion du monoxyde de carbone à la vapeur d3) est recombinée à l'étape e) avec au moins une partie de l'effluent issu de l'étape d4) d'hydrolyse catalytique.

## f) Étape f) de lavage à l'eau de l'effluent recombiné

L'effluent issu de l'étape e) de recombinaison est ensuite avantageusement lavé à l'eau (étape f). L'étape f) présente l'avantage d'éliminer les impuretés telles que $NH_3$ et HCl solubles dans l'eau et particulièrement néfastes à l'opération de l'étape g) d'élimination des gaz acides.

Dans une variante du procédé selon l'invention, l'effluent issu de l'étape e) est préalablement soumis à une étape k) d'élimination des métaux lourds sur au moins un lit de garde adapté.

L'étape k) permet d'éliminer substantiellement les métaux lourds, tels que le plomb, l'arsenic et le mercure, avant que l'effluent ne soit traité dans l'étape f) de lavage à l'eau et plus particulièrement avant l'étape g) d'élimination des gaz acides. La technologie de réacteur à lit fixe sera avantageusement privilégiée pour capter les métaux lourds contenus dans le gaz de synthèse à l'aide de masses de captation connues de l'homme du métier. Avantageusement, l'étape k) est réalisée sur au moins un ou plusieurs lits de garde en présence d'une ou plusieurs masses de captation contenant une ou plusieurs phases actives. Avantageusement, lesdites phases actives contiennent au moins un composé du soufre, tel que par exemple du soufre élémentaire supporté, et/ou un sulfure métallique tel qu'un sulfure de cuivre et/ou de zinc, et au moins un métal précieux tel que l'argent, l'or ou le palladium, et/ou une zéolithe échangée à l'argent, et/ou des oxydes de métaux de transition tels que par exemple les oxydes de cuivre, de nickel. Avantageusement, la ou lesdites phases actives sont supportées, par exemple sur une alumine, une silice, une silice-alumine, ou un charbon actif.

Dans le cadre de l'invention, le passage de l'effluent dans au moins un lit de garde de l'étape k) permet d'atteindre les spécifications requises en entrée de la section d'élimination des gaz acides (étape g), ainsi que les spécifications requises pour l'unité de synthèse Fischer-Tropsch i).

Dans une seconde variante selon l'invention, l'étape k) d'élimination des métaux lourds est mise en oeuvre entre l'étape f) de lavage à l'eau et l'étape g) d'élimination des gaz acides.

Dans une troisième variante selon l'invention, l'étape k) d'élimination des métaux lourds est mise en oeuvre après l'étape g) d'élimination des gaz acides lorsque le solvant utilisé à l'étape g) est un solvant chimique dérivé d'alcanolamine, connu de l'homme du métier pour être moins sensible que les solvants physiques à la présence de métaux lourds.

A la sortie de l'étape k) d'élimination des métaux lourds, l'effluent présente une teneur généralement inférieure à 1 ppb volume de plomb, d'arsenic et de mercure, de manière préférée inférieure à 0,5 ppb volume, de manière plus préférée inférieure à 0,1 ppb volume et de manière encore plus préférée inférieure à 0,01 ppb volume de plomb, d'arsenic et de mercure.

**g) Étape g) d'élimination des gaz acides**

L'étape g) selon l'invention est dédiée à l'élimination des gaz acides tels que les composés soufrés ($H_2S$) ou le $CO_2$ restant dans le gaz de synthèse issu de l'étape f). L'étape g) est réalisée par la mise en oeuvre de solvants chimiques ou physiques ou un mélange de solvants chimiques et physiques ou encore tout autre moyen connu par l'homme du métier. Le solvant chimique peut être par exemple une amine primaire, secondaire ou tertiaire dérivée d'alcanolamine telle que le monoéthanolamine (MEA), la diéthanolamine (DEA) ou la méthyldiéthanolamine (MDEA). Le solvant physique peut être par exemple à base de mélanges de dialkyléther de polyéthylène glycol (PEG) tels que des diéthyléther ou dibutyléther de PEG, ou de méthanol.

L'étape d'élimination des gaz acides est à titre d'exemple réalisée au moyen d'une colonne d'absorption des gaz acides grâce au solvant chimique ou physique utilisé suivie d'une étape de régénération du solvant afin de réduire la consommation de solvant dans l'unité. Cette étape de régénération peut être avantageusement réalisée en deux étapes afin d'éliminer d'une part un flux gazeux riche en $CO_2$ et d'autre part un flux gazeux riche en $H_2S$. Dans une variante du procédé selon l'invention, ledit flux gazeux riche en $CO_2$ est purifié de l'$H_2S$ et avantageusement recyclé à l'étape c) de gazéification.

**h) Étape h) de purification finale**

Le catalyseur à base de cobalt utilisé dans l'étape i) de synthèse Fischer-Tropsch est hautement sensible aux impuretés présentes dans le gaz de synthèse, qui ne sont à ce titre tolérées qu'à des quantités de l'ordre du ppb (partie par billion). A la sortie de l'étape g), le gaz de synthèse peut encore contenir des impuretés à des teneurs d'environ 100 ppb volume de $H_2S$ et de COS.

Selon le procédé de l'invention, une étape h) de purification finale sur au moins un lit de garde est mise en oeuvre afin d'adsorber totalement les dernières traces d'impuretés restantes dans le gaz de synthèse telles que les composés halogénés, $H_2S$, COS, HCN et $NH_3$. L'étape de purification finale est réalisée par tout moyen connu de l'homme du métier, à titre d'exemple sur au moins un lit de garde à base d'oxyde de zinc ZnO, de Cu/ZnO, de charbon actif et permet d'atteindre les spécifications requises en termes d'impuretés dans le gaz de synthèse mis en oeuvre à l'étape i) de synthèse Fischer-Tropsch.

Avantageusement, à la sortie de l'étape h), le gaz de synthèse présente une teneur en soufre inférieure à 100 ppb volume, de préférence inférieure à 50 ppb volume, de manière plus préférée inférieure à 10 ppb volume; une teneur en HCN inférieure 100 ppb volume, de préférence inférieure à 50 ppb volume, de manière plus préférée inférieure à 10 ppb volume et une teneur en $NH_3$ inférieure 100 ppm volume, de préférence inférieure à 10 ppm volume, de manière plus préférée inférieure à 1 ppm volume.

**i Étape i) de réaction catalytique de synthèse Fischer-Tropsch**

Selon le procédé de l'invention, l'étape i) de synthèse Fischer-Tropsch du procédé est réalisée à partir d'une alimentation comprenant l'effluent issu de l'étape h) et permettant la production d'un flux comprenant des hydrocarbures liquides de synthèse et au moins un effluent gazeux. De manière avantageuse, l'alimentation de l'étape i) de synthèse Fischer-Tropsch comporte du monoxyde de carbone et de l'hydrogène avec un rapport molaire $H_2$/CO compris entre 0,5 et 4, de préférence entre 1 et 3, de manière plus préférée entre 1,5 et 2,5.

L'étape i) de synthèse Fischer-Tropsch est mise en oeuvre dans une unité réactionnelle comprenant un ou plusieurs réacteurs adaptés, dont la technologie est connue de l'homme de métier. Il peut s'agir, par exemple, de réacteurs à lit fixe multitubulaire, ou de réacteurs de type colonne à bulles, connus en anglais sous l'appellation de "slurry bubble column", ou de réacteurs microcanaux.

Selon un mode préféré de l'invention, l'étape i) met en oeuvre un ou plusieurs réacteurs de type colonne à bulles. La synthèse étant fortement exothermique, ce mode de réalisation permet, entre autres, d'améliorer le contrôle thermique du réacteur et de créer peu de perte de charges.

Le catalyseur mis en oeuvre dans cette étape i) de synthèse Fischer-Tropsch est généralement tout solide catalytique connu de l'homme du métier permettant de réaliser la synthèse Fischer-Tropsch. De préférence, le catalyseur mis en oeuvre dans ladite étape comporte du cobalt ou du fer, de manière plus préférée du cobalt. Le catalyseur mis en oeuvre à l'étape i) est généralement un catalyseur supporté. Le support peut être, à titre d'exemple, à base d'alumine, de silice ou de titane.

Les conditions de température et de pression sont variables et adaptées au catalyseur mis en oeuvre dans cette étape i). La pression absolue est généralement comprise entre 10 et 60 bar, de préférence entre 15 et 35 bar et préférentiellement entre 20 et 30 bar. La température peut être généralement comprise entre 170 et 280°C, de préférence entre 190 et 260°C et préférentiellement entre 210 et 240°C.

Selon une variante du procédé de l'invention, au moins une fraction gazeuse issue de la synthèse Fischer-Tropsch (étape i) est avantageusement recyclée dans l'étape c) de gazéification afin d'être convertie en gaz de synthèse et améliorer ainsi le rendement massique de la chaîne de procédé.

Dans une autre configuration du procédé selon l'invention, la fraction gazeuse issue de la synthèse Fischer-Tropsch i) est avantageusement au moins en partie envoyée dans une unité indépendante de production de gaz de synthèse (par exemple POx : Partial oxydation, SMR : Steam Methane Reforming, ATR : Autothermal Reforming, EHTR.: Enhanced Heat Transfer Reformer..), ce gaz de synthèse peut être recyclé à tout point de la chaîne entre la sortie de l'étape c) et l'étape i).

Dans une autre configuration du procédé selon l'invention, la fraction gazeuse issue de l'étape i) peut au moins en partie alimenter en énergie les opérations de séchage a1) et/ou les opérations de torréfaction a2) pour maximiser l'efficacité énergétique de la chaîne de procédé.

Dans une autre configuration du procédé selon l'invention, la fraction gazeuse issue de l'étape i) permet de produire de l'électricité dans un cycle combiné qui peut être partiellement alimenté par la vapeur produite par les étapes c), d3) et i) pour augmenter l'efficacité énergétique de la chaîne de procédé.

Ces différentes configurations peuvent être combinées avantageusement de façon à optimiser l'économie de la chaîne de procédé intégré selon l'invention.

## j) Étape j) d'hydrotraitement et/ou d'isomérisation

Selon le procédé de l'invention, l'étape i) est avantageusement suivie d'une étape j) d'hydrotraitement et/ou d'isomérisation des coupes hydrocarbonées issues de l'étape i). L'étape j) est réalisée dans des conditions opératoires usuelles connues de l'homme du métier et vise à valoriser les coupes hydrocarbonées issues de l'étape i) par la production d'hydrocarbures liquides, en particulier des biocarburants liquides, à savoir du bio-naphta, de la bio-essence, du bio-kérosène, du bio-gazole et des bases lubrifiantes bio de très haute qualité.

Une option possible est la production de coupes paraffiniques, produits de bases pour des procédés de pétrochimie, par exemple production d'une coupe C10-C13 destinée à la production de (bio) LAB (Linear Alkyl Benzene), ou encore de (bio) cires pour diverses applications industrielles.

## Description des figures

La figure 1 représente le schéma général du procédé selon l'invention, dans le mode de réalisation selon lequel les effluents issus des unités d3) et d4) sont recombinés directement à l'étape e).

La figure 2 représente le schéma général du procédé selon l'invention, dans un autre mode de réalisation selon lequel au moins une partie de l'effluent issu de l'unité d3) est envoyée en mélange avec la partie complémentaire vers l'unité d4).

D'autres avantages, détails et caractéristiques de l'invention apparaîtront plus clairement dans la description des deux modes de réalisation illustrés dans les figures 1 et 2. Ces modes de réalisation sont donnés, à titre d'exemple, et ne présentent aucun caractère limitatif. Cette illustration du procédé de l'invention ne comporte pas l'ensemble des composantes nécessaires à sa mise en oeuvre. Seuls les éléments nécessaires à la compréhension de l'invention y sont représentés, l'homme du métier étant capable de compléter cette représentation pour mettre en oeuvre l'invention.

Selon les figures 1 et 2, une charge biomasse et une charge hydrocarbonée sont envoyées séparément par la voie (1) et la voie (2) vers les unités a1) de séchage. A la sortie des unités a1), les charges séchées sont ensuite torréfiées dans les unités de torréfaction a2) avant d'être envoyées éventuellement vers les unités de granulation a3) puis vers les unités de broyage a4) puis éventuellement combinées dans l'unité b). L'étape b) de combinaison peut être réalisée à la sortie des étapes de séchage a1) de la charge biomasse et de la charge hydrocarbonée ou à la sortie des étapes de torréfaction a2) des deux charges (représentation en pointillé).

Les charges prétraitées et combinées dans l'unité b) sont ensuite envoyées vers l'unité de gazéification c). La charge prétraitée est combinée en présence d'un flux contenant au moins 90% volume d'oxygène (non représenté) et dans des conditions de pression et de température telles que décrites plus haut dans la description.

Le gaz de synthèse issu du réacteur de l'unité c), purifié de la majorité des particules de cendres ou poussières et d'une partie des éléments solubles dans l'eau est avantageusement envoyé vers l'unité d1) de lavage à l'eau puis est fractionné en deux effluents. Une première partie du gaz de synthèse est envoyée dans une unité d2) comportant au moins un lit de garde approprié pour en éliminer les composés halogénés notamment le chlore. Le gaz de synthèse issu de l'unité d2) est ensuite directement envoyé vers l'unité d3) dans lequel il est soumis à la réaction de conversion du monoxyde de carbone à la vapeur dans les conditions opératoires décrites ci-avant. Parallèlement, la partie complémentaire de l'effluent de gaz de synthèse issu de l'unité d1) est envoyée dans l'unité d4) dans laquelle ledit gaz de synthèse est soumis à une réaction d'hydrolyse catalytique du COS et HCN en $H_2S$ et $NH_3$ dans les conditions opératoires telles que décrites dans la description. Dans la variante décrite à la figure 2, la partie complémentaire est envoyée en mélange avec au moins une partie de l'effluent issu de l'unité d3) de conversion du monoxyde de carbone à la vapeur vers l'unité d4). Les effluents issus des unités d3) et d4) sont recombinés dans l'unité e).

A la sortie de l'unité e), l'effluent est envoyé vers l'unité f) dans laquelle il est soumis à un lavage à l'eau pour en éliminer les impuretés solubles telles que $NH_3$ et HCl. Ledit effluent issu de l'étape e) est avantageusement préalablement soumis à une étape k) d'élimination des métaux lourds sur au moins un lit de garde adapté (représenté en pointillé dans les figures 1 et 2). L'effluent lavé issu de l'étape f) est ensuite acheminé vers l'unité g) d'élimination des gaz acides par un solvant chimique ou physique. L'effluent issu de l'unité g) est ensuite envoyé vers l'unité h) dans lequel il est purifié des dernières traces restantes telles que les halogénés, $H_2S$, COS, HCN et $NH_3$ par passage sur au moins un lit de garde à base de d'oxyde de zinc.

L'effluent purifié issu de l'unité h) est ensuite envoyé vers l'unité i) de réaction catalytique de synthèse Fischer-Tropsch dans les conditions telles que décrites dans la description. Les coupes hydrocarbonées produites à l'issue de la réaction catalytique de synthèse Fischer-Tropsch réalisée dans l'unité i) sont ensuite envoyées dans une unité j) dans laquelle elles sont valorisées par la mise en oeuvre d'étapes d'hydrotraitement et/ou d'isomérisation. La fraction gazeuse issue de l'unité i) (représenté en pointillé dans les figures 1 et 2) pourra au moins en partie alimenter en énergie les opérations de séchage a1) et/ou les opérations de torréfaction a2) pour maximiser l'efficacité énergétique de la chaîne.

Une partie de ladite fraction gazeuse peut également être recyclée dans l'unité c) de gazéification afin d'être convertie en gaz de synthèse et améliorer ainsi le rendement massique de la chaîne (représenté en pointillé dans les figures 1 et 2). Une partie de ladite fraction gazeuse peut être envoyée dans une unité indépendante de production de gaz de synthèse (non représenté), ce gaz de synthèse pourra être recyclée à tout point de la chaîne entre la sortie de l'étape c) et l'étape i) (représenté en pointillé dans les figures 1 et 2).

## EXEMPLES

### Catalyseur C1

Le catalyseur C1 est un catalyseur industriel à base de cobalt et de molybdène. Ce catalyseur industriel a une teneur en cobalt métallique de 2,2 % masse et en molybdène métallique de 8,3 % masse. Sa surface spécifique déterminée par la méthode BET est de 196 $m^2$/g. Ce catalyseur est utilisé sous sa forme sulfurée dans l'étape d3) de conversion du monoxyde de carbone à la vapeur. Le catalyseur se présente sous la forme d'extrudés d'environ 3 mm de diamètre.

### Activation du catalyseur C1

Le catalyseur C1 est sulfuré à une température de 500 °C (rampe de 5 °C/min) pendant deux heures et une pression absolue de 26 bar avec un gaz contenant 15 % volume d'hydrogène sulfuré et 85 % volume d'hydrogène. Le taux de sulfuration du molybdène déterminé par spectroscopie de photoélectrons X (XPS) est de 92 %.

### Exemple 1: Traitement d'une charges conformément au procédé selon l'invention

A partir de bouteilles de gaz de concentrations connues, une charge modèle dont la composition est représentative d'une charge industrielle à l'entrée de l'unité d3) après la mise en oeuvre de l'étape d2) a été recomposée. Les propriétés de cette charge sont données dans le Tableau 1.

**Tableau 1: Propriétés de la charge**

| Propriétés | Unité | Valeur |
|---|---|---|
| Ratio $H_2$/CO | [mol/mol] | 0,6 |
| Ratio $H_2O$/CO | [mol/mol] | 2,0 |
| Teneur en inertes | [% vol] | 66 |

(suite)

| Propriétés | Unité | Valeur |
|---|---|---|
| Teneur en $H_2S$ | [% vol] | 0,4 |

Cette charge est injectée dans un réacteur en lit fixe chargé en catalyseur C1. Les conditions opératoires sélectionnées sont :

- vitesse volumique horaire VVH (volume de charge / volume de catalyseur / heure) = 8100 $h^{-1}$
- pression opératoire absolue : 26 bar
- température d'entrée du lit catalytique : 270 °C
- température du lit catalytique : 330 °C

Les débits de gaz entrant dans l'unité d3) ont été ajustés au début du test expérimental. Au cours de ce test sur l'unité, la composition des gaz en sortie de l'unité a été analysée en continu. Ce suivi analytique a permis de déterminer la conversion du monoxyde de carbone au cours du temps. Les résultats expérimentaux sont donnés à la Figure 1 a.

## Figure 1a: Conversion du monoxyde de carbone en fonction du temps d'opération (TOS).

D'après la figure 1a, les performances obtenues au cours du temps varient peu. La conversion du monoxyde de carbone est constante à environ 90 % sur toute la durée du test.

### Exemple 2: Traitement d'une charge chlorée non-traitée par l'étape d2) (non-conforme à l'invention)

Une charge modèle a été simulée à partir de gaz étalon afin d'obtenir une composition représentative d'une charge industrielle à l'entrée de l'unité de conversion du monoxyde de carbone à la vapeur non soumise à une étape d2) d'élimination de composés halogénés. Les propriétés de cette charge sont données dans le Tableau 2.

**Tableau 2: Propriétés de la charge**

| Propriétés | Unité | Valeur |
|---|---|---|
| Ratio $H_2$/CO | [mol/mol] | 0,6 |
| Ratio $H_2O$/CO | [mol/mol] | 2,0 |
| Teneur en inertes | [% vol] | 66 |
| Teneur en $H_2S$ | [% vol] | 0,4 |
| Teneur en HCl | [ppm vol] | 50 |

Le gaz de synthèse ainsi modélisé est injecté dans un réacteur en lit fixe chargé en catalyseur C1. Les conditions opératoires sélectionnées sont :

- vitesse volumique horaire WH (volume de charge / volume de catalyseur / heure) = 8100 $h^{-1}$
- pression opératoire absolue : 26 bar
- température d'entrée du lit catalytique : 270 °C
- température du lit catalytique : 330 °C

Les débits de gaz entrant dans l'unité ont été ajustés au début du test expérimental. Au cours de ce test sur l'unité, la composition des gaz en sortie de l'unité a été analysée en continu. Ce suivi analytique a permis de déterminer la conversion en monoxyde de carbone au cours du temps. Les résultats expérimentaux sont donnés à la Figure 2a.

**Figure 2a : Conversion du monoxyde de carbone en fonction du temps d'opération (TOS).**

D'après la Figure 2a, la conversion en monoxyde de carbone, après un temps de latence, diminue très rapidement pour atteindre des valeurs proches de 20 % suite à l'injection de chlore dans la charge.

L'injection d'HCl dans la charge modèle a été arrêtée. Nous observons alors que la conversion en monoxyde de carbone, calculée à partir de l'analyse chromatographique des gaz en sortie de l'unité, remonte pour se stabiliser à environ 50 %. Les conditions opératoires sont restées inchangées. Les résultats expérimentaux sont présentés à la

Figure 3a.

**Figure 3a: Conversion du monoxyde de carbone en fonction du temps d'opération (TOS) après l'arrêt de l'injection de chlore.**

D'après les résultats de la Figure 3a, la conversion en monoxyde de carbone avec une charge ne contenant plus de chlore atteint un palier à environ 50 % de conversion. Le catalyseur C1 de conversion du monoxyde de carbone à la vapeur ne retrouve donc pas son niveau de performance initial d'environ 90 %, ce qui illustre le caractère partiellement irréversible de l'empoisonnement par le chlore.

**Exemple 3 Procédé de production et de traitement de gaz de synthèse conformément au procédé selon l'invention**

L'exemple 3 selon l'invention a été réalisé selon une partie de l'enchaînement du procédé décrit sur la figure 1.

Débit de gaz à traiter (flux en entrée de l'étape d1)) : 100 Nm$^3$/h,
Débit de gaz vers l'étape d2) (effluent issu de l'étape de fractionnement d1) : première partie) : 51,2 Nm$^3$/h,
Débit de gaz vers l'étape d4) (effluent issu de l'étape de fractionnement d1) : partie complémentaire) : 48,8 Nm$^3$/h.

Étape d2) d'élimination des composés halogénés

La masse de captation M1 utilisée est un solide industriel à base d'alumine promue par Na$_2$O. Le solide M1 a une teneur en alumine de 95% masse, et en Na$_2$O de 5% masse. Sa surface spécifique déterminée par la méthode BET est de 200 m$^2$/g. Le solide se présente sous la forme d'extrudés d'environ 3 mm de diamètre. Ce solide est utilisé dans l'étape d2) d'élimination des composés halogénés.
La charge gazeuse de composition décrite dans le tableau 3 (effluent issu de l'étape d1)) est injectée dans un réacteur en lit fixe chargé en solide M1. Les conditions opératoires sélectionnées sont :

- vitesse volumique horaire WH (volume de charge / volume de masse de captation / heure) = 200 h$^{-1}$
- pression opératoire absolue : 26 bar
- température du lit : 250°C

Le suivi analytique en sortie de réacteur a permis de déterminer la teneur en HCl dans le flux de gaz traité. Les résultats expérimentaux sont donnés dans le tableau 3 (composition de l'effluent issu de l'étape d2).

Étape d3) de conversion du CO à la vapeur

Le catalyseur C1 utilisé est un catalyseur industriel à base de cobalt et de molybdène. Ce catalyseur industriel a une teneur en cobalt métallique de 2,2% masse et en molybdène métallique de 8,3% masse. Sa surface spécifique déterminée par la méthode BET est de 196 m$^2$/g. Ce catalyseur est utilisé sous sa forme sulfurée. Le catalyseur se présente sous la forme d'extrudés d'environ 3 mm de diamètre.

La charge gazeuse de composition décrite dans le tableau 3 (effluent issu de l'étape d2)) est injectée dans un réacteur en lit fixe chargé en catalyseur C1. Les conditions opératoires sélectionnées sont :

- vitesse volumique horaire WH (volume de charge / volume de catalyseur / heure) = 3000 h$^{-1}$
- pression opératoire absolue : 26 bar
- température d'entrée du lit catalytique : 250°C
- température du lit catalytique : 350°C

Le suivi analytique en sortie de réacteur a permis de déterminer la conversion du monoxyde de carbone. Les résultats expérimentaux sont donnés dans le tableau 3 (composition de l'effluent issu de l'étape d3)).

Étape d4) d'hydrolyse du COS et de l'HCN

Le catalyseur C2 utilisé est un catalyseur industriel à base d'oxyde de titane. Ce catalyseur industriel a une teneur en oxyde de titane de 85% masse. Sa surface spécifique déterminée par la méthode BET est de 120 m$^2$/g. Le catalyseur se présente sous la forme d'extrudés d'environ 3 mm de diamètre.

La charge gazeuse de composition décrite dans le tableau 3 (effluent complémentaire issu de l'étape d1)) est injectée dans un réacteur en lit fixe chargé en catalyseur C2. Les conditions opératoires sélectionnées sont :

- vitesse volumique horaire WH (volume de charge / volume de catalyseur / heure) = 1500 h$^{-1}$
- pression opératoire absolue : 26 bar
- température du lit catalytique : 250°C

Le suivi analytique en sortie de réacteur a permis de déterminer les conversions de COS et HCN. Les résultats expérimentaux sont donnés dans le tableau 3 (composition de l'effluent issu de l'étape d4)).

Les flux de gaz issus des étapes d3) et d4) sont recombinés lors de l'étape de recombinaison e) afin d'obtenir un mélange de gaz présentant un ratio $H_2$/CO égal à 2. La composition de l'effluent gazeux obtenu à l'issue de l'étape e) est donnée dans le tableau 4.

Étape f) de lavage à l'eau de l'effluent recombiné

L'effluent recombiné issu de l'étape e) est lavé à l'eau avant d'opérer directement l'étape g) d'élimination des gaz acides sur ledit effluent recombiné lavé.

Étape g) d'élimination des gaz acides

Selon l'invention, le gaz de synthèse est purifié par un lavage par une solution aqueuse d'amine pour éliminer le $CO_2$ et l'$H_2S$. La solution aqueuse d'amine utilisée est composée de 38% masse de méthyldiéthanolamine (MDEA), 8% masse de diéthanolamine (DEA) et 54% masse d'eau, et est mise en oeuvre dans les conditions opératoires suivantes dans l'absorbeur :

- Température : 45°C
- Pression: 26 bar

Les teneurs résiduelles en composés acides dans le gaz à l'issue de l'étape d'élimination g) des gaz acides selon l'invention sont : pour l'$H_2S$ de 1 ppm vol (vol = volume), pour le $CO_2$ de 10 ppm vol, pour le COS de 8 ppm vol, pour l'HCN de 1 ppm vol, pour l'HCl de 0,001 ppm vol.

Un flux de vapeur d'eau est injecté dans le gaz effluent à l'issue de l'étape g). La composition de l'effluent gazeux obtenu à l'issue de l'étape g) et après ajout de vapeur d'eau est donnée dans le tableau 4.

Étape h) de purification finale

L'effluent issu de l'étape g) d'élimination des gaz acides est soumis à une étape h) de purification finale tel que décrit dans le document WO2006/008317.

L'étape h) de purification finale comporte un réacteur d'hydrolyse du COS et HCN résiduel, suivi d'un lit de garde destiné à piéger l'$H_2S$ résiduel.

L'hydrolyse de COS et HCN est réalisée à l'aide du catalyseur C2. La charge gazeuse de composition décrite dans le tableau 4 (effluent issu de l'étape g)) est injectée dans un réacteur en lit fixe chargé en catalyseur C2. Les conditions opératoires sélectionnées sont :

- vitesse volumique horaire WH (volume de charge / volume de catalyseur / heure) = 400 $h^{-1}$
- pression opératoire absolue : 26 bar
- température du lit catalytique : 200°C

Une masse de captation M2 contenant 95% masse de ZnO est disposée dans un lit de garde en aval du réacteur d'hydrolyse. La charge gazeuse issue de l'unité d'hydrolyse est ainsi injectée dans le lit de garde contenant la masse de captation M2. Le solide se présente sous la forme d'extrudés d'environ 3 mm de diamètre. Les conditions opératoires sont les suivantes :

- vitesse volumique horaire WH (volume de charge / volume de masse de captation / heure) = 300 $h^{-1}$
- pression opératoire absolue : 26 bar
- température du lit catalytique : 200°C

Le gaz de synthèse issu de l'étape h) de purification finale contient 1 ppb volume d'$H_2S$, 1 ppb volume de COS, 1 ppb volume de HCN, 9 ppm volume de $NH_3$.

La composition détaillée de l'effluent gazeux obtenu à l'issue de l'étape h) est donnée dans le tableau 4.

**Tableau 3. Composition des gaz de synthèse dans le procédé.**

| | Flux de gaz à traiter en entrée de d1) | Effluents issus de l'étape de fractionnement d1) | Effluent issu de l'étape d2) | Effluent issu de l'étape d3) | Effluent issu de l'étape d4) |
|---|---|---|---|---|---|
| $H_2$ (%vol) | 14,6 | 14,6 | 14,6 | 39,6 | 14,6 |
| CO (%vol) | 25,7 | 25,7 | 25,7 | 2,0 | 25,7 |
| $CO_2$ (%vol) | 6,6 | 6,6 | 6,6 | 31,5 | 6,6 |
| $H_2O$ (%vol) | 50,8 | 50,8 | 50,8 | 24,6 | 50,8 |
| HCl (ppm vol) | 50 | 50 | 1 | 1 | 50 |
| $H_2S$ (ppm vol) | 4300 | 4300 | 4300 | 4750 | 4775 |
| COS (ppm vol) | 480 | 480 | 480 | 30 | 3 |
| HCN (ppm vol) | 200 | 200 | 200 | 1 | 1 |
| $NH_3$ (ppm vol) | 650 | 650 | 650 | 850 | 850 |
| $N_2$ (%vol) | 1,7 | 1,7 | 1,7 | 1,7 | 1,7 |
| $H_2$/CO | 0,6 | 0,6 | 0,6 | 19,8 | 0,6 |

**Tableau 4. Composition des gaz de synthèse dans le procédé.**

| | Effluent issu de l'étape de recombinaison e) | Effluent issu de l'étape g) | Effluent issu de l'étape h) |
|---|---|---|---|
| $H_2$ (%vol) | 27,4 | 63,4 | 63,4 |
| CO (%vol) | 13,6 | 31,5 | 31,5 |
| $CO_2$ (%vol) | 19,4 | 0,001 | 0,001 |
| $H_2O$ (%vol) | 37,4 | 1,0 | 1,0 |
| HCl (ppm vol) | 25 | 0,001 | 0,001 |
| $H_2S$ (ppm vol) | 4762 | 1 | 0,001 |
| COS (ppm vol) | 17 | 8 | 0,001 |
| HCN (ppm vol) | 1 | 1 | 0,001 |
| $NH_3$ (ppm vol) | 850 | 8 | 9 |
| $N_2$ (%vol) | 1,7 | 4,1 | 4,1 |
| $H_2$/CO | 2,0 | 2,0 | 2,0 |

## Exemple 4 Procédé de production et de traitement de gaz de synthèse conformément au procédé selon l'invention

Comme pour l'exemple 3, l'exemple 4 selon l'invention a été réalisé selon une partie de l'enchaînement du procédé décrit sur la figure 1. Cependant, dans l'exemple 4, l'étape g) d'élimination des gaz acides est mise en oeuvre par une solution aqueuse de méthanol au lieu d'une solution aqueuse d'amine utilisée dans l'exemple 3.

Débit de gaz à traiter (flux en entrée de l'étape d1)): 100 $Nm^3$/h,
Débit de gaz vers l'étape d2) (effluent issu de l'étape de fractionnement d1) : première partie) : 51,2 $Nm^3$/h,
Débit de gaz vers l'étape d4) (effluent issu de l'étape de fractionnement d1) : partie complémentaire) : 48,8 $Nm^3$/h.

### Étape d2) d'élimination des composés halogénés

La masse de captation M1 utilisée est un solide industriel à base d'alumine promue par $Na_2O$. Le solide M1 a une teneur en alumine de 95% masse, et en $Na_2O$ de 5% masse. Sa surface spécifique déterminée par la méthode BET est de 200 $m^2$/g. Le solide se présente sous la forme d'extrudés d'environ 3 mm de diamètre. Ce solide est utilisé dans l'étape d2) d'élimination des composés halogénés.
La charge gazeuse de composition décrite dans le tableau 5 (effluent issu de l'étape d1)) est injectée dans un réacteur en lit fixe chargé en solide M1. Les conditions opératoires sélectionnées sont :

- vitesse volumique horaire VVH (volume de charge / volume de masse de captation / heure) = 200 $h^{-1}$
- pression opératoire absolue : 26 bar
- température du lit : 250°C

Le suivi analytique en sortie de réacteur a permis de déterminer la teneur en HCl dans le flux de gaz traité. Les résultats expérimentaux sont donnés dans le tableau 5 (composition de l'effluent issu de l'étape d2).

### Étape d3) de conversion du CO à la vapeur

Le catalyseur C1 utilisé est un catalyseur industriel à base de cobalt et de molybdène. Ce catalyseur industriel a une teneur en cobalt métallique de 2,2% masse et en molybdène métallique de 8,3% masse. Sa surface spécifique déterminée par la méthode BET est de 196 $m^2$/g. Ce catalyseur est utilisé sous sa forme sulfurée. Le catalyseur se présente sous la forme d'extrudés d'environ 3 mm de diamètre.
La charge gazeuse de composition décrite dans le tableau 5 (effluent issu de l'étape d2)) est injectée dans un réacteur en lit fixe chargé en catalyseur C1. Les conditions opératoires sélectionnées sont :

- vitesse volumique horaire WH (volume de charge / volume de catalyseur / heure) = 3000 $h^{-1}$

- pression opératoire absolue : 26 bar
- température d'entrée du lit catalytique : 250°C
- température du lit catalytique : 350°C

Le suivi analytique en sortie de réacteur a permis de déterminer la conversion du monoxyde de carbone. Les résultats expérimentaux sont donnés dans le tableau 5 (composition de l'effluent issu de l'étape d3)).

Étape d4) d'hydrolyse du COS et de l'HCN

Le catalyseur C2 utilisé est un catalyseur industriel à base d'oxyde de titane. Ce catalyseur industriel a une teneur en oxyde de titane de 85% masse. Sa surface spécifique déterminée par la méthode BET est de 120 m$^2$/g. Le catalyseur se présente sous la forme d'extrudés d'environ 3 mm de diamètre.
La charge gazeuse de composition décrite dans le tableau 5 (effluent complémentaire issu de l'étape d1)) est injectée dans un réacteur en lit fixe chargé en catalyseur C2. Les conditions opératoires sélectionnées sont :

- vitesse volumique horaire WH (volume de charge / volume de catalyseur / heure) = 1500 h$^{-1}$
- pression opératoire absolue : 26 bar
- température du lit catalytique : 250°C

Le suivi analytique en sortie de réacteur a permis de déterminer les conversions de COS et HCN. Les résultats expérimentaux sont donnés dans le tableau 5 (composition de l'effluent issu de l'étape d4)).
Les flux de gaz issus des étapes d3) et d4) sont recombinés lors de l'étape de recombinaison e) afin d'obtenir un mélange de gaz présentant un ratio $H_2$/CO égal à 2. La composition de l'effluent gazeux obtenu à l'issue de l'étape e) est donnée dans le tableau 6.

Étape f) de lavage à l'eau de l'effluent recombiné

L'effluent recombiné issu de l'étape e) est lavé à l'eau avant d'opérer directement l'étape g) d'élimination des gaz acides sur ledit effluent recombiné lavé.

Étape g) d'élimination des gaz acides

Selon l'invention, le gaz de synthèse est purifié par un lavage par une solution aqueuse de méthanol pour éliminer le $CO_2$ et l'$H_2S$. La solution aqueuse de méthanol est composée de 95% masse de méthanol et 5% masse d'eau, et est mise en oeuvre dans les conditions opératoires suivantes dans l'absorbeur :

- Température : -40°C
- Pression: 26 bar

Les teneurs résiduelles en composés acides dans le gaz à l'issue de l'étape d'élimination g) des gaz acides selon l'invention sont : pour l'$H_2S$ de 0,1 ppm vol (vol = volume), pour le $CO_2$ de 0,5% volume, pour le COS de 0,1 ppm vol, pour l'HCN de 0,1 ppm vol, pour l'HCl de 0,001 ppm vol.
Un flux de vapeur d'eau est injecté dans le gaz effluent à l'issue de l'étape g). La composition de l'effluent gazeux obtenu à l'issue de l'étape g) et après ajout de vapeur d'eau est donnée dans le tableau 6.

Étape h) de purification finale

L'effluent issu de l'étape g) d'élimination des gaz acides est soumis à une étape h) de purification finale tel que décrit dans le document WO2006/008317.
L'étape h) de purification finale comporte un réacteur d'hydrolyse du COS et HCN résiduel, suivi d'un lit de garde destiné à piéger l'$H_2S$ résiduel.
L'hydrolyse de COS et HCN est réalisée à l'aide du catalyseur C2. La charge gazeuse de composition décrite dans le tableau 6 (effluent issu de l'étape g)) est injectée dans un réacteur en lit fixe chargé en catalyseur C2. Les conditions opératoires sélectionnées sont :

- vitesse volumique horaire VVH (volume de charge / volume de catalyseur / heure) = 400 h$^{-1}$
- pression opératoire absolue : 26 bar
- température du lit catalytique : 200°C

Une masse de captation M2 contenant 95% masse de ZnO est disposée dans un lit de garde en aval du réacteur d'hydrolyse. La charge gazeuse issue de l'unité d'hydrolyse est ainsi injectée dans le lit de garde contenant la masse de captation M2. Le solide se présente sous la forme d'extrudés d'environ 3 mm de diamètre. Les conditions opératoires sont les suivantes :

- vitesse volumique horaire VVH (volume de charge / volume de masse de captation / heure) = 300 h$^{-1}$
- pression opératoire absolue : 26 bar
- température du lit catalytique : 200°C

Le gaz de synthèse issu de l'étape h) de purification finale contient 1 ppb volume d'$H_2S$, 1 ppb volume de COS, 1 ppb volume de HCN, 0,2 ppm volume de $NH_3$.

La composition détaillée de l'effluent gazeux obtenu à l'issue de l'étape h) est donnée dans le tableau 6.

**Tableau 5. Composition des gaz de synthèse dans le procédé.**

|  | Flux de gaz à traiter en entrée de d1) | Effluents issus de l'étape de fractionneme nt d1) | Effluent issu de l'étape d2) | Effluent issu de l'étape d3) | Effluent issu de l'étape d4) |
|---|---|---|---|---|---|
| $H_2$ (%vol) | 14,6 | 14,6 | 14,6 | 39,6 | 14,6 |
| CO (%vol) | 25,7 | 25,7 | 25,7 | 2,0 | 25,7 |
| $CO_2$ (%vol) | 6,6 | 6,6 | 6,6 | 31,5 | 6,6 |
| $H_2O$ (%vol) | 50,8 | 50,8 | 50,8 | 24,6 | 50,8 |
| HCl (ppm vol) | 50 | 50 | 1 | 1 | 50 |
| $H_2S$ (ppm vol) | 4300 | 4300 | 4300 | 4750 | 4775 |
| COS (ppm vol) | 480 | 480 | 480 | 30 | 3 |
| HCN (ppm vol) | 200 | 200 | 200 | 1 | 1 |
| $NH_3$ (ppm vol) | 650 | 650 | 650 | 850 | 850 |
| $N_2$ (%vol) | 1,7 | 1,7 | 1,7 | 1,7 | 1,7 |
| $H_2$/CO | 0,6 | 0,6 | 0,6 | 19,8 | 0,6 |

**Tableau 6. Composition des gaz de synthèse dans le procédé.**

|  | Effluent issu de l'étape de recombinaison e) | Effluent issu de l'étape g) | Effluent issu de l'étape h) |
|---|---|---|---|
| $H_2$ (%vol) | 27,4 | 62,8 | 62,8 |
| CO (%vol) | 13,6 | 31,2 | 31,2 |
| $CO_2$ (%vol) | 19,4 | 1,0 | 1,0 |
| $H_2O$ (%vol) | 37,4 | 1,0 | 1,0 |
| HCl (ppm vol) | 25 | 0,001 | 0,001 |
| $H_2S$ (ppm vol) | 4762 | 0,1 | 0,001 |
| COS (ppm vol) | 17 | 0,1 | 0,001 |
| HCN (ppm vol) | 1 | 0,1 | 0,001 |

(suite)

|  | Effluent issu de l'étape de recombinaison e) | Effluent issu de l'étape g) | Effluent issu de l'étape h) |
|---|---|---|---|
| $NH_3$ (ppm vol) | 850 | 0,1 | 0,2 |
| $N_2$ (%vol) | 1,7 | 4,0 | 4,0 |
| $H_2$/CO | 2,0 | 2,0 | 2,0 |

**Revendications**

1. Procédé intégré de production d'hydrocarbures liquides à partir d'une charge contenant au moins une fraction de biomasse et éventuellement au moins une fraction d'une autre charge, ledit procédé comprenant au moins les étapes suivantes:

   a) une étape de prétraitement de la fraction de biomasse et éventuellement de la ou des autres fractions, comprenant au moins une des opérations a1), a2), a4):

   - a1) séchage,
   - a2) torréfaction,
   - a4) broyage,

   b) une étape éventuelle de combinaison de la fraction de biomasse prétraitée et de la ou des autres fractions de charge prétraitées ou non,
   c) une étape de gazéification de l'effluent issu de l'étape b) et/ou de la fraction prétraitée issue de l'étape a) et éventuellement d'au moins une fraction d'une autre charge introduite directement à l'étape de gazéification dans un réacteur à flux entrainé,
   d) une étape de conditionnement du gaz de synthèse issu de l'étape c) comprenant:

   - une étape d1) de lavage à l'eau et de fractionnement dudit gaz de synthèse en au moins deux effluents : une première partie et une partie complémentaire,

   - une étape d2) d'élimination des composés halogénés par passage de ladite première partie sur au moins un lit de garde adapté,
   - une étape d3) de conversion du monoxyde de carbone à la vapeur réalisée sur l'effluent issu de l'étape d2),
   - une étape d4) d'hydrolyse catalytique des composés COS et HCN contenus dans ladite partie complémentaire de l'effluent issu de l'étape d1) en $H_2S$ et $NH_3$,

   e) une étape de recombinaison d'au moins une fraction de chacun des effluents issus des étapes d3) et d4),
   f) une étape de lavage à l'eau de l'effluent recombiné issu de l'étape e) pour éliminer les impuretés telles que $NH_3$ et HCl,
   g) une étape d'élimination des gaz acides $CO_2$ et $H_2S$ contenus dans l'effluent de l'étape f) par un ou plusieurs solvants chimiques ou physiques, seuls ou en mélange,
   h) une étape de purification finale sur au moins un lit de garde permettant d'adsorber les traces d'impuretés restantes dans le gaz de synthèse issu de l'étape g) telles que $H_2S$, COS, HCN et $NH_3$,
   i) une étape de réaction catalytique de synthèse Fischer-Tropsch réalisée sur l'effluent issu de l'étape h).

2. Procédé selon la revendication 1 dans lequel l'étape de prétraitement comprend une opération de granulation a3) mise en oeuvre après l'opération de torréfaction a2) et avant l'opération de broyage a4).

3. Procédé selon la revendication 1 dans lequel l'étape de prétraitement comprend une opération de granulation a3) mise en oeuvre avant l'opération de torréfaction a2).

4. Procédé selon l'une quelconque des revendications précédentes dans lequel l'effluent issu de l'étape e) est préalablement soumis à une étape k) d'élimination des métaux lourds sur au moins un lit de garde adapté.

**5.** Procédé selon l'une quelconque des revendications précédentes dans lequel au moins une fraction de l'effluent issu de l'étape d3) de conversion du monoxyde de carbone à la vapeur est envoyée en mélange avec ladite partie complémentaire vers l'étape d'hydrolyse catalytique d4).

**6.** Procédé selon l'une quelconque des revendications précédentes dans lequel la charge comprend au moins une fraction de charge hydrocarbonée.

**7.** Procédé selon la revendication 6 dans lequel la fraction de biomasse et la fraction de charge hydrocarbonée sont séchées (a1), torréfiées (a2), éventuellement granulées (a3) et broyées (a4) séparément et combinées (b) après broyage (a4).

**8.** Procédé selon la revendication 6 dans lequel la fraction de biomasse et la fraction de charge hydrocarbonée sont séchées (a1) séparément et combinées (b) avant torréfaction (a2).

**9.** Procédé selon la revendication 6 dans lequel la fraction de biomasse et la fraction de charge hydrocarbonée sont séchées (a1), torréfiées (a2) séparément et combinées (b) avant broyage (a4).

**10.** Procédé selon l'une quelconque des revendications précédentes dans lequel l'étape i) de synthèse Fischer-Tropsch est suivie d'une étape j) d'hydrotraitement et/ou d'isomérisation des coupes hydrocarbonées issues de l'étape i).

**11.** Procédé selon l'une quelconque des revendications précédentes dans lequel l'opération de séchage a1) est réalisée à une température comprise entre 20 et 180°C pendant une durée comprise entre 5 et 180 minutes.

**12.** Procédé selon l'une quelconque des revendications précédentes dans lequel l'opération de torréfaction a2) est réalisée à une température entre 220 et 350°C pendant une durée comprise entre 5 et 180 minutes, à une pression opératoire absolue comprise entre 0,1 et 15 bar.

**13.** Procédé selon l'une quelconque des revendications précédentes dans lequel l'étape c) de gazéification est réalisée dans des conditions de température comprise entre 800 et 1800 °C et de pression absolue comprise entre 20 et 120 bar.

**14.** Procédé selon l'une quelconque des revendications précédentes dans lequel l'étape d2) est réalisée sur au moins un lit de garde en présence d'une masse de captation contenant une phase active de type zéolithe et/ou de l'oxyde de zinc, et/ou un oxyde basique.

**15.** Procédé selon l'une quelconque des revendications précédentes dans lequel l'étape d3) est réalisée en présence d'un catalyseur comprenant du cobalt sulfuré et/ou du molybdène sulfuré, à une température d'entrée proche de la température du gaz de synthèse issu de l'étape de lavage à l'eau et de fractionnement d1).

**16.** Procédé selon l'une quelconque des revendications précédentes dans lequel l'étape d4) est mise en oeuvre à une température comprise entre 100 et 400°C en présence d'un catalyseur contenant un composé à base de platine, ou un oxyde d'un élément choisi dans le groupe comprenant le titane, le zirconium, l'aluminium, le chrome, le zinc, ou leur mélange.

**17.** Procédé selon l'une quelconque des revendications précédentes dans lequel l'étape h) est réalisée sur au moins un lit de garde à base d'oxyde de zinc, de Cu/ZnO, de charbon actif.

**18.** Procédé selon l'une quelconque des revendications précédentes dans lequel l'étape i) de synthèse Fischer-Tropsch est mise en oeuvre dans des conditions de température comprise entre 170 et 280°C, de pression absolue comprise entre 10 et 60 bar en présence d'un catalyseur comprenant du cobalt ou du fer.

**19.** Installation permettant de mettre en oeuvre le procédé selon l'une quelconque des revendications 1 à 18 comprenant :

- au moins une unité de prétraitement (a) de la charge, comprenant une unité de séchage, une unité de torréfaction, éventuellement une unité de granulation, et une unité de broyage;
- éventuellement une unité de combinaison comprenant une conduite (b) permettant de réunir les effluents issus des différentes unités de prétraitement ;
- une unité de gazéification (c) des effluents prétraités comprenant au moins un réacteur à flux entraîné;

- une unité de conditionnement du gaz de synthèse comprenant :

    - une unité de lavage à l'eau et de fractionnement du flux gaz permettant de diviser le flux de gaz de synthèse en au moins deux effluents;
    - au moins un lit de garde permettant l'élimination des composés halogénés sur un desdits deux effluents situé en amont d'une unité de conversion du monoxyde de carbone à la vapeur;
    - une unité d'hydrolyse catalytique;
    - une unité de recombinaison (e) des effluents issus respectivement de l'unité de conversion du monoxyde de carbone à la vapeur et de l'unité d'hydrolyse catalytique ;

- une unité de lavage à l'eau de l'effluent issu de la unité de conditionnement du gaz de synthèse;
- une unité d'élimination des gaz acides contenus dans l'effluent lavé;
- une unité de purification finale de l'effluent lavé et désacidifié comprenant au moins un lit de garde;
- une unité réactionnelle de synthèse catalytique Fischer-Tropsch.

20. Installation selon la revendication 19 comprenant en outre au moins une unité d'hydrotraitement et/ou isomérisation des coupes hydrocarbonées issues de la unité réactionnelle de synthèse catalytique Fischer-Tropsch.


**Patentansprüche**

1. Integriertes Verfahren zur Herstellung von flüssigen Kohlenwasserstoffen aus einem Ausgangsstoff, der mindestens einen Biomasseanteil und eventuell mindestens einen Anteil eines anderen Ausgangsstoffes enthält, wobei das Verfahren mindestens die folgenden Schritte aufweist:

    a) einen Vorbehandlungsschritt des Biomasseanteils und eventuell des oder der anderen Anteile, umfassend mindestens einen der Vorgänge a1), a2), a4) :

        - a1) Trocknen,
        - a2) Rösten,
        - a4) Mahlen,

    b) einen eventuellen Schritt des Kombinierens des vorbehandelten Biomasseanteils und des oder der anderen Anteile an Ausgangsstoffen, die vorbehandelt werden oder nicht,
    c) einen Vergasungsschritt des Abstroms, der aus Schritt b) hervorgegangen ist, und/oder des vorbehandelten Anteils, der aus Schritt a) hervorgegangen ist, und eventuell von mindestens einem Anteil eines anderen Ausgangsstoffes, der direkt bei dem Vergasungsschritt in einen Flugstromreaktor eingeführt wird,
    d) einen Schritt des Konditionierens des Synthesegases, das aus Schritt c) hervorgegangen ist, umfassend:

        - einen Schritt d1) des Waschens mit Wasser und des Fraktionierens des Synthesegases in mindestens zwei Abströme: einen ersten Teil und einen komplementären Teil,
        - einen Schritt d2) des Entfernens der Halogenverbindungen durch Leiten des ersten Teils über mindestens ein geeignetes Schutzbett,
        - einen Schritt d3) des Dampfumwandelns des Kohlenmonoxids, der über dem Abstrom, der aus dem Schritt d2) hervorgegangen ist, durchgeführt wird,
        - einen Schritt d4) der katalytischen Hydrolyse der Verbindungen COS und HCN, die in dem komplementären Teil des Abstroms von Schritt d1) enthalten sind, in $H_2S$ und $NH_3$,

    e) einen Schritt des Rekombinierens von mindestens einem Anteil von jedem der Abströme, die aus den Schritten d3) und d4) hervorgegangen sind,
    f) einen Schritt des Waschens mit Wasser des Abstroms, der rekombiniert wird, der aus dem Schritt e) hervorgegangen ist, um die Verunreinigungen wie zum Beispiel $NH_3$ et HCl zu beseitigen,
    g) einen Schritt des Entfernens der sauren Gase $CO_2$ und $H_2S$, die in dem Abstrom von Schritt f) enthalten sind, durch ein oder mehrere chemische oder physikalische Lösungsmittel, jeweils für sich oder als Mischung,
    h) einen letzten Reinigungsschritt über mindestens einem Schutzbett, der ermöglicht, die restlichen Spuren von Verunreinigungen in dem Synthesegas, das aus Schritt g) hervorgegangen ist, wie beispielsweise $H_2S$, COS, HCN und $NH_3$, zu adsorbieren,
    i) einen katalytischen Reaktionsschritt der Fischer-Tropsch-Synthese, der auf dem Abstrom, der aus dem Schritt h) hervorgegangen ist, durchgeführt wird.

2. Verfahren nach Anspruch 1, wobei der Vorbehandlungsschritt einen Vorgang des Granulierens a3) aufweist, der nach dem Vorgang des Röstens a2) und vor dem Vorgang des Mahlens a4) umgesetzt wird.

3. Verfahren nach Anspruch 1, wobei der Vorbehandlungsschritt einen Vorgang des Granulierens a3) aufweist, der vor dem Vorgang des Mahlens a2) umgesetzt wird.

4. Verfahren nach einem der vorhergehenden Ansprüche, wobei der Abstrom, der aus dem Schritt e) hervorgegangen ist, zuvor einem Schritt k) des Entfernens der Schwermetalle über mindestens einem geeigneten Schutzbett unterzogen wird.

5. Verfahren nach einem der vorhergehenden Ansprüche, wobei der mindestens eine Anteil des Abstroms, der aus dem Schritt d3) des Dampfumwandelns des Kohlenmonoxids hervorgegangen ist, in Mischung mit dem komplementären Teil dem Schritt der katalytischen Hydrolyse d4) zugeführt wird.

6. Verfahren nach einem der vorhergehenden Ansprüche, wobei der Ausgangsstoff mindestens einen Anteil an Kohlenwasserstoffausgangsstoff umfasst.

7. Verfahren nach Anspruch 6, wobei der Biomasseanteil und der Anteil an Kohlenwasserstoffausgangsstoff getrennt und kombiniert (b) nach dem Mahlen (a4) getrocknet (a1), geröstet (a2), eventuell granuliert (a3) und gemahlen (a4) werden.

8. Verfahren nach Anspruch 6, wobei der Biomasseanteil und der Anteil an Kohlenwasserstoffausgangsstoff getrennt und kombiniert (b) vor dem Rösten (a2) getrocknet (a1) werden.

9. Verfahren nach Anspruch 6, wobei der Biomasseanteil und der Anteil an Kohlenwasserstoffausgangsstoff getrennt und kombiniert (b) vor dem Mahlen (a4) getrocknet (a1), geröstet (a2) werden.

10. Verfahren nach einem der vorhergehenden Ansprüche, wobei auf den Schritt i) der Fischer-Tropsch-Synthese ein Schritt j) des Hydrotreating und/oder der Isomerisierung der Kohlenwasserstoffschnitte, die aus dem Schritt i) hervorgegangen sind, folgt.

11. Verfahren nach einem der vorhergehenden Ansprüche, wobei der Vorgang des Trocknens a1) bei einer Temperatur zwischen 20 und 180 °C während eine Dauer zwischen 5 und 180 Minuten durchgeführt wird.

12. Verfahren nach einem der vorhergehenden Ansprüche, wobei der Vorgang des Röstens a2) bei einer Temperatur zwischen 220 und 350 °C während eine Dauer zwischen 5 und 180 Minuten bei einem absoluten Betriebsdruck zwischen 0,1 und 15 bar durchgeführt wird.

13. Verfahren nach einem der vorhergehenden Ansprüche, wobei der Schritt c) des Vergasens unter Bedingungen von einer Temperatur zwischen 800 und 1.800 °C und von einem absoluten Druck zwischen 20 und 120 bar durchgeführt wird.

14. Verfahren nach einem der vorhergehenden Ansprüche, wobei der Schritt d2) über mindestens einem Schutzbett in Anwesenheit von einer Einfangmasse, die eine aktive Phase vom Typ des Zeoliths und/oder Zinkoxid und/oder ein basisches Oxid umfasst, durchgeführt wird.

15. Verfahren nach einem der vorhergehenden Ansprüche, wobei der Schritt d3) in Gegenwart eines Katalysators, der sulfuriertes Kobalt und/oder sulfuriertes Molybdän umfasst, bei einer Einlasstemperatur, die etwa der Temperatur des Synthesegases entspricht, das aus dem Schritt des Waschens mit Wasser und des Fraktionierens d1) hervorgegangen ist, durchgeführt wird.

16. Verfahren nach einem der vorhergehenden Ansprüche, wobei der Schritt d4) bei einer Temperatur zwischen 100 und 400 °C in Gegenwart eines Katalysators durchgeführt wird, der eine Verbindung auf Platinbasis oder ein Oxid eines Elementes enthält, das aus der Gruppe ausgewählt ist, die Titan, Zirkonium, Aluminium, Chrom, Zink oder eine Mischung davon aufweist.

17. Verfahren nach einem der vorhergehenden Ansprüche, wobei der Schritt h) über mindestens einem Schutzbett auf der Basis von Zinkoxid, von Cu/ZnO, von Aktivkohle durchgeführt wird.

18. Verfahren nach einem der vorhergehenden Ansprüche, wobei der Schritt i) der Fischer-Tropsch-Synthese unter Bedingungen von einer Temperatur zwischen 170 und 280°C, von einem absoluten Druck zwischen 10 und 60 bar in Gegenwart eines Katalysators, der Kobalt oder Eisen umfasst, durchgeführt wird.

19. Anlage, die ermöglicht, das Verfahren nach einem der Ansprüche 1 bis 18 umzusetzen, umfassend:

- mindestens eine Einheit zum Vorbehandeln (a) des Ausgangsstoffes, umfassend eine Einheit zum Trocknen, eine Einheit zum Rösten, eventuell eine Einheit zum Granulieren und eine Einheit zum Mahlen;
- eventuell eine Einheit zum Kombinieren, umfassend eine Leitung (b), die ermöglicht, die Abströme zu vereinen, die aus den verschiedenen Einheiten zum Vorbehandeln hervorgegangen sind;
- eine Einheit zum Vergasen (c) der vorbehandelten Abströme, die mindestens einen Flugstromreaktor aufweist;
- eine Einheit zum Konditionieren des Synthesegases, umfassend:

- eine Einheit zum Waschen mit Wasser und zum Fraktionieren des Synthesegases, die ermöglicht, den Strom des Synthesegases in mindestens zwei Abströme aufzuteilen;
- mindestens ein Schutzbett, das das Entfernen der Halogenverbindungen über einem der zwei Abströme ermöglicht, das vorgelagert vor einer Einheit zum Dampfumwandeln des Kohlenmonoxids angeordnet ist;
- eine Einheit für die katalytische Hydrolyse;
- eine Einheit zum Rekombinieren (e) der Abströme, die jeweils aus der Einheit zum Dampfumwandeln des Kohlenmonoxids und der Einheit für die katalytische Hydrolyse hervorgegangen sind;

- eine Einheit zum Waschen mit Wasser des Abstroms, der aus der Einheit zum Konditionieren des Synthesegases hervorgegangen ist;
- eine Einheit zum Entfernen der sauren Gase in dem gewaschenen Abstrom;
- eine Einheit zum letzten Reinigen des gewaschenen und entsäuerten Abstroms, umfassend mindestens ein Schutzbett;
- eine katalytische Reaktionseinheit der Fischer-Tropsch-Synthese.

20. Anlage nach Anspruch 19, ferner umfassend mindestens eine Einheit zum Hydrotreating und/oder zur Isomerisierung der Kohlenwasserstoffschnitte, die aus der katalytischen Reaktionseinheit der Fischer-Tropsch-Synthese hervorgegangen sind.

**Claims**

1. An integrated process for the production of liquid hydrocarbons from a feed containing at least one fraction of biomass and optionally at least one fraction of another feed, said process comprising at least the following steps:

a) a step for pre-treatment of the biomass fraction and optionally of the other fraction or fractions, comprising at least one of the operations a1), a2), a4):

• a1) drying,
• a2) torrefaction,
• a4) grinding,

b) an optional step for combining the pre-treated biomass fraction and the other fraction or fractions of the feed, which may or may not have been pre-treated,
c) a step for gasification of the effluent obtained from step b) and/or of the pre-treated fraction obtained from step a) and optionally of at least one fraction of another feed introduced directly into the gasification step in an entrained flow reactor,
d) a step for conditioning synthesis gas obtained from step c), comprising:

• a step d1) for scrubbing with water and for fractionating said synthesis gas into at least two effluents: a first portion and a complementary portion,
• a step d2) for eliminating halogenated compounds by passing said first portion through at least one suitable guard bed,

• a water gas shift step d3) carried out on the effluent obtained from step d2),

• a step d4) for catalytic hydrolysis of the COS and HCN compounds contained in said complementary portion of the effluent obtained from step d1) into $H_2S$ and $NH_3$,

e) a step for recombination of at least one fraction of each of the effluents obtained from steps d3) and d4),

f) a step for scrubbing the recombined effluent obtained from step e) with water in order to eliminate impurities such as $NH_3$ and HCl,

g) a step for elimination of the acid gases $CO_2$ and $H_2S$ contained in the effluent from step f) with one or more chemical or physical solvents, used alone or as a mixture,

h) a step for final purification over at least one guard bed in order to adsorb traces of impurities remaining in the synthesis gas obtained from step g), such as $H_2S$, COS, HCN and $NH_3$,

i) a catalytic Fischer-Tropsch synthesis reaction step carried out on the effluent obtained from step h).

2. The process according to claim 1, in which the pre-treatment step comprises a granulation operation a3) carried out after the torrefaction operation a2) and before the grinding operation a4).

3. The process according to claim 1, in which the pre-treatment step comprises a granulation operation a3) carried out before the torrefaction operation a2).

4. The process according to any one of the preceding claims, in which the effluent obtained from step e) firstly undergoes a step k) for elimination of heavy metals over at least one suitable guard bed.

5. The process according to any one of the preceding claims, in which at least one fraction of the effluent obtained from water gas shift step d3) is sent to the catalytic hydrolysis step d4) as a mixture with said complementary portion.

6. The process according to any one of the preceding claims, in which the feed comprises at least one hydrocarbon feed fraction.

7. The process according to claim 6, in which the fraction of biomass and the fraction of hydrocarbon feed are dried (a1), torrefied (a2), optionally granulated (a3) and ground (a4) separately and combined (b) after grinding (a4).

8. The process according to claim 6, in which the fraction of biomass and the fraction of hydrocarbon feed are dried (a1) separately and combined (b) before torrefaction (a2).

9. The process according to claim 6, in which the fraction of biomass and the fraction of hydrocarbon feed are dried (a1) and torrefied (a2) separately and combined (b) before grinding (a4).

10. The process according to any one of the preceding claims, in which the Fischer-Tropsch synthesis step i) is followed by a step j) for hydrotreatment and/or isomerization of the hydrocarbon cuts obtained from step i).

11. The process according to any one of the preceding claims, in which the drying operation a1) is carried out at a temperature in the range 20°C to 180°C for a period in the range 5 to 180 minutes.

12. The process according to any one of the preceding claims, in which the torrefaction operation a2) is carried out at a temperature in the range 220°C to 350°C for a period in the range 5 to 180 minutes at an absolute operating pressure in the range 0.1 to 15 bar.

13. The process according to any one of the preceding claims, in which the gasification step c) is carried out under temperature conditions in the range 800°C to 1800°C and absolute pressure conditions in the range 20 to 120 bar.

14. The process according to any one of the preceding claims, in which step d2) is carried out over at least one guard bed in the presence of a capture mass containing an active zeolite type phase and/or zinc oxide and/or a basic oxide.

15. The process according to any one of the preceding claims, in which step d3) is carried out in the presence of a catalyst comprising sulphurized cobalt and/or sulphurized molybdenum, at an inlet temperature close to the temperature of the synthesis gas obtained from the water scrubbing and fractionation step d1).

16. The process according to any one of the preceding claims, in which step d4) is carried out at a temperature in the range 100°C to 400°C in the presence of a catalyst containing a platinum-based compound or an oxide of an element selected from the group comprising titanium, zirconium, aluminium, chromium, zinc or a mixture thereof.

17. The process according to any one of the preceding claims, in which step h) is carried out over at least one guard bed based on zinc oxide, Cu/ZnO and activated carbon.

18. The process according to any one of the preceding claims, in which the Fischer-Tropsch synthesis step i) is carried out under temperature conditions in the range 170°C to 280°C and absolute pressure conditions in the range 10 to 60 bar, in the presence of a catalyst comprising cobalt or iron.

19. A facility for carrying out the process according to any one of claims 1 to 18, comprising:

   • at least one unit (a) for pre-treatment of the feed, comprising a drying unit, a torrefaction unit, optionally a granulation unit, and a grinding unit;
   • optionally, a combination unit comprising a line (b) for combining the effluents obtained from the various pre-treatment units;
   • a unit (c) for gasification of the pre-treated effluents comprising at least one entrained flow reactor;
   • a unit for conditioning synthesis gas, comprising:

      ◦ a unit for scrubbing with water and for fractionation of the gas stream in order to divide the stream of synthesis gas into at least two effluents;
      ◦ at least one guard bed for eliminating halogenated compounds on one of said two effluents located upstream of a water gas shift unit;
      ◦ a catalytic hydrolysis unit;
      ◦ a unit (e) for recombination of the effluents obtained respectively from the water gas shift unit and the catalytic hydrolysis unit;

   • a unit for scrubbing the effluent obtained from the synthesis gas conditioning unit with water;
   • a unit for eliminating acid gases contained in the scrubbed effluent;
   • a unit for final purification of the scrubbed and deacidified effluent, comprising at least one guard bed;
   • a catalytic Fischer-Tropsch synthesis reaction unit.

20. The facility according to claim 19, further comprising at least one unit for hydrotreatment and/or isomerization of the hydrocarbon cuts obtained from the catalytic Fischer-Tropsch synthesis reaction unit.

Figure 1

Figure 2

EP 2 914 701 B1

**EP 2 914 701 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 7741377 B
- WO 2008113766 A
- WO 2007134075 A
- DE 102007044726
- WO 2006008317 A